(19) Europäisches Patentamt
European Patent Office
Office européen des brevets

(11) **EP 3 926 493 B1**

(12) **EUROPEAN PATENT SPECIFICATION**

(45) Date of publication and mention
of the grant of the patent:
**15.02.2023 Bulletin 2023/07**

(21) Application number: **20875658.5**

(22) Date of filing: **25.11.2020**

(51) International Patent Classification (IPC):
**G06F 16/9537** (2019.01)   **G06F 16/29** (2019.01)
**G06F 16/33** (2019.01)   **G06F 16/387** (2019.01)
**G06F 40/30** (2020.01)   **G06N 3/04** (2000.01)

(52) Cooperative Patent Classification (CPC):
**G06F 16/9537; G06F 16/29; G06F 16/3347;**
**G06F 16/387; G06F 40/30; G06N 3/045;**
G06N 5/022

(86) International application number:
**PCT/CN2020/131321**

(87) International publication number:
**WO 2021/212827 (28.10.2021 Gazette 2021/43)**

(54) **METHOD AND APPARATUS FOR RETRIEVING GEOGRAPHICAL POSITION, AND DEVICE AND COMPUTER STORAGE MEDIUM**

VERFAHREN UND VORRICHTUNG ZUM AUFFINDEN GEOGRAFISCHER POSITIONEN SOWIE VORRICHTUNG UND COMPUTERSPEICHERMEDIUM

PROCÉDÉ ET APPAREIL DE RÉCUPÉRATION DE POSITION GÉOGRAPHIQUE, DISPOSITIF ET SUPPORT DE STOCKAGE INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2020 CN 202010334224**

(43) Date of publication of application:
**22.12.2021 Bulletin 2021/51**

(73) Proprietor: **Baidu Online Network Technology (Beijing) Co., Ltd.**
**Beijing 100085 (CN)**

(72) Inventors:
• **HUANG, Jizhou**
  **Beijing 100085 (CN)**
• **WANG, Haifeng**
  **Beijing 100085 (CN)**

• **FAN, Miao**
  **Beijing 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**CN-A- 103 714 092      CN-A- 109 408 814**
**CN-A- 110 162 593      CN-A- 110 377 686**
**CN-A- 110 765 368      CN-A- 111 026 937**
**CN-A- 111 666 461      US-A1- 2015 379 017**
**US-A- 2019 065 506**

**Description**

**Field of the Disclosure**

The present disclosure relates to the technical field of computer application, and particularly to the technical field of artificial intelligence.

**Background of the Disclosure**

Regarding map-like applications, geographic position retrieval is one of functions most frequently used by users. Either at the client end or webpage end, a user may input a query at a retrieval function entry in the form of a text or speech to retrieve geographic positions.

Conventional geographic position-retrieving methods mostly employ a manner of literally matching the query with the names of the geographic position for retrieval, and cannot well meet the needs of semantics-associated geographic position retrieval, even cross-language geographic position retrieval.

For example, when a Chinese user retrieves the Eiffel Tower located in Paris of France, he probably uses a Chinese query for retrieval. However, as internationalized map service, the Eiffel Tower is probably marked in a local language, namely, French language, or in internationally universal English language. Therefore, pure literal matching cannot duly meet the needs of cross-language retrieval.

CN 110 765 368 A relates to semantic retrieval and describes acquiring a query word from a user terminal; and transforming the query term into a query term vector using a pre-generated model. The obtained query term vector is used to retrieve a set of POI vectors from a search corpus using a product quantization algorithm, and at least one POI is determined based on the set of POI vectors for recommendation to the user.

**Summary of the Disclosure**

In view of the foregoing discussions, the present disclosure provides a method, apparatus, device and computer storage medium for retrieving geographic positions, to better satisfy cross-language geographic position retrieval demands.

In a first aspect, the present disclosure provides a method for retrieving geographic positions, including:

obtaining a query input by a user, respectively determining a vector representation of each character in the query using an international character vector representation dictionary, and mapping (301b) characters in descriptive texts of geographic positions in a map database to vector representations of the characters by the international character vector representation dictionary, the international character vector representation dictionary being used to map characters of at least two languages to the same vector space using a mapping function;

inputting the vector representations of respective characters in the query into a first neural network obtained by pre-training, to obtain a vector representation of the query, and inputting (302b) the vector representations of the characters in the descriptive texts of the geographic positions into a second neural network obtained by pre-training to obtain the vector representations of the geographic positions;

determining , by using cosine similarity, a similarity respectively between the vector representation of the query and a vector representation of each geographic position in a map database;

determining a retrieved geographic position according to respective similarities.

In a second aspect, the present disclosure provides an apparatus for retrieving geographic positions, including:

a first vector determining unit configured to obtain a query input by a user, respectively determine a vector representation of each character in the query using an international character vector representation dictionary, and map characters in descriptive texts of geographic positions in a map database to vector representations of the characters by the international character vector representation dictionary, the international character vector representation dictionary being used to map characters of at least two languages to the same vector space using a mapping function;

a second vector determining unit configured to input vector representations of the characters in the query into a first neural network obtained by pre-training, to obtain a vector representation of the query, and input the vector representations of the characters in the descriptive texts of the geographic position into a second neural network obtained by pre-training to obtain the vector representation of the geographic position;

a similarity determining unit configured to determine , by using cosine similarity, a similarity respectively between the vector representation of the query and a vector representation of each geographic position in a map database;

a retrieval processing unit configured to determine a retrieved geographic position according to respective similarities.

In a third aspect, the present disclosure further provides an electronic device, including:

at least one processor; and
a memory communicatively connected with the at least one processor; wherein,
the memory stores instructions executable by the at least one processor, and the instructions are executed by the at least one processor to enable the at least one processor to execute the method according to the above first aspect.

In a further aspect, the present disclosure further provides a non-transitory computer-readable storage medium storing computer instructions therein, wherein the computer instructions are used to cause the computer to execute the method according to the above first aspect.

As can be seen from the above technical solutions, in the present disclosure, the international character vector representation dictionary is used to map characters of different languages to the same vector space, the vector representation of the query and the vector representations of geographic positions are respectively obtained based on the vector representations of the characters, thereby determining the retrieved geographic position further based on the vector representation of the query and the vector representations of the geographic positions. This manner can better satisfy cross-language geographic position retrieval demands.

Other effects of the above optional modes will be described below in conjunction with specific embodiments.

## Brief Description of Drawings

The figures are intended to facilitate understanding the solutions, not to limit the present disclosure. In the figures,

FIG. 1 illustrates an exemplary system architecture to which embodiments of the present disclosure may be applied;
FIG. 2 illustrates a schematic diagram of a computing framework of a similarity model according to embodiments of the present disclosure;
FIG. 3 illustrates a flow chart of a method for retrieving geographic positions according to Embodiment 1 of the present disclosure;
FIG. 4 illustrates a flow chart of a method for training a similarity model according to Embodiment 2 of the present disclosure;
FIG. 5 illustrates a schematic diagram showing the principles for training the similarity model according to Embodiment 2 of the present disclosure;
FIG. 6 illustrates a flow chart of a method for training a similarity model according to Embodiment 3 of the present disclosure;
FIG. 7 illustrates a schematic diagram of building a sematic graph according to Embodiment 3 of the present disclosure;
FIG. 8 illustrates schematic diagram showing the principles for training the similarity model according to Embodiment 3 of the present disclosure;
FIG. 9 illustrates a block diagram of an apparatus for retrieving geographic positions according to embodiments of the present disclosure;
FIG. 10 illustrates a block diagram of an electronic device for implementing embodiments of the present disclosure.

## Detailed Description of Preferred Embodiments

Exemplary embodiments of the present disclosure are described below with reference to the accompanying drawings, include various details of the embodiments of the present disclosure to facilitate understanding, and should be considered as being only exemplary. Also, for the sake of clarity and conciseness, depictions of well-known functions and structures are omitted in the following description.

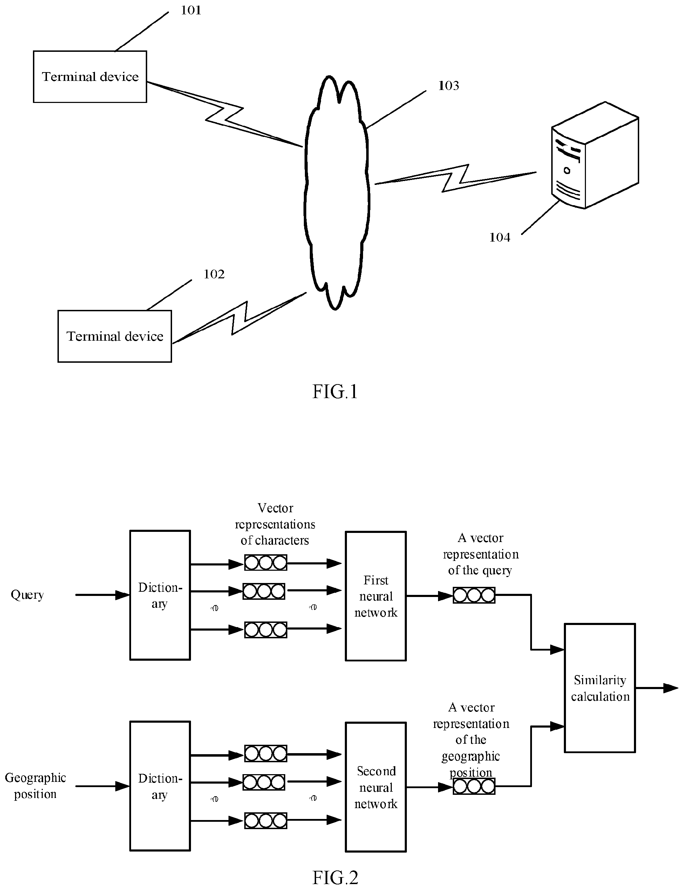

FIG. 1 illustrates an exemplary system architecture to which embodiments of the present disclosure may be applied. As shown in FIG. 1, the system architecture may comprise terminal devices 101 and 102, a network 103 and a server 104. The network 103 is used to provide a medium for a communication link between the terminal devices 101, 102 and the server 104. The network 103 may comprise various connection types such as wired link, a wireless communication link or an optical fiber cable.

The user may use the terminal devices 101 and 102 to interact with the server 104 via the network 103. The terminal devices 101 and 102 may have various applications installed thereon, such as map-like applications, voice interaction applications, webpage browser applications, communication-type applications, etc.

The terminal devices 101 and 102 may be various electronic devices capable of supporting and displaying a map-like application, and include but not limited to smart phones, tablet computers, smart wearable devices etc. The apparatus according to the present disclosure may be disposed or run in the server 104. The apparatus may be implemented as a plurality of software or software modules (e.g., for providing distributed service) or as a single software or software module, which will not be limited in detail herein.

For example, the apparatus for retrieving geographic positions is disposed and runs in the server 104, and the server 104 receives a retrieval request of the terminal device 101 or 102, the retrieval request including a query. The apparatus for retrieving geographic positions retrieves the geographic position in a manner provided by embodiments of the present disclosure, and returns a retrieval result to the terminal device 101 or 102. A map database is maintained at the server 104 end. The map database may be locally stored in the server 104 or stored in other servers for invocation by the server 104. The server 104 can also acquire and record the user's behaviors related to use of the map-like applications, thereby forming a historical click log, a historical browse log etc.

The server 104 may be a single server or a server group consisting of a plurality of servers. It should be appreciated that the number of the terminal devices, network and server in FIG. 1 is only for illustration purpose. Any number of terminal devices, networks and servers are feasible according to the needs in implementations.

The core idea of the present disclosure lies in using an international character vector representation dictionary to map characters of different languages to the same vector space, obtaining a vector representation of the query and a vector representation of a geographic position, respectively, based on the vector representations of the characters, thereby determining the retrieved geographic position further based on the vector representation of the query and the vector representation of the geographic position. The method and apparatus according to the present disclosure will be described in detail in conjunction with embodiments.

Embodiment 1

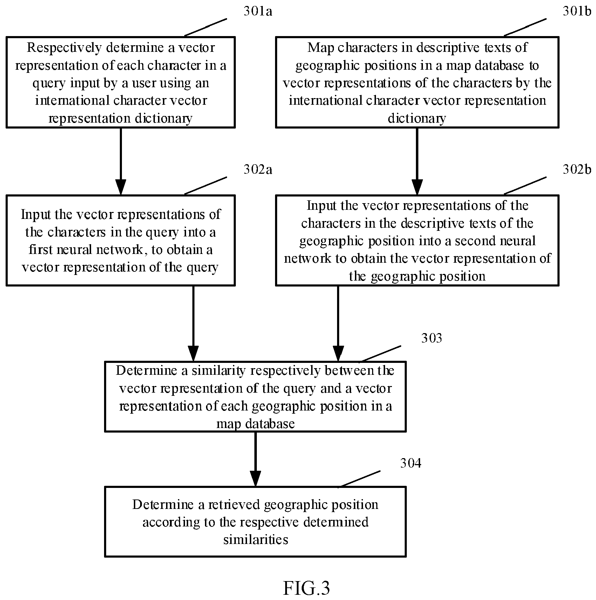

The method for retrieving geographic positions implemented in the present application is based on a similarity model. As shown in FIG. 2, the similarity model may include an international character vector representation dictionary ("Dictionary" in short in the figure), a first neural network and a second neural network. The method for retrieving geographic positions includes the following steps as shown in FIG. 3:

At 301a, after a query input by the user is obtained, a vector representation of each character in the query input by the user is respectively determined using the international character vector representation dictionary. Take the query "KFC" input by the user as an example, a character vector representation of "K", a character vector representation of "F" and a character vector representation of "C" are determined respectively using the international character vector representation dictionary.

The international character vector representation dictionary involved in the present application is used to map characters of at least two languages to the same vector space so that a vector representation can be obtained from quantization when characters of the different languages are quantized. The vector representations obtained by mapping the characters of all languages have the same dimensionality.

Assuming c is a character which may be a character of any language supported by the dictionary and C is the vector representation corresponding to c, C is expressed as follows:

$$C = D(c)$$

where $D()$ is a mapping function employed by the international character vector representation dictionary.

Likewise, at 301b, characters in descriptive texts of geographic positions in a map database are also mapped by the international character vector representation dictionary to vector representations of the characters. The geographic positions involved in the present application include geographic positions in the map database and refer to geographic position points in the map-like applications. The geographic position points may be provided for searching and browsing by the user and recommended to the user. These geographic position points have basic attributes such as latitude and longitude, names, administrative address and types. The geographic position points may include but not limited to POI (Point of Interest), AOI (Area of Interest) and ROI (Region of Interest) etc.

To enable implementation, during retrieval, that the geographic position is not only made matching with the query in terminology, descriptive information of other geographic positions can also be retrieved matching with the query, in the present disclosure, after vector representations are determined respectively for the characters in the descriptive texts of geographic positions, vector representations of the geographic positions are further determined. The descriptive texts may include but not limited to at least one type of name, tag, address, comment and picture descriptive text. The information of these descriptive texts is also stored and maintained in the map data.

For example, as far as the geographic position "KFC (store at Xizhimen South Street)", the descriptive texts include:

Name-"KFC (store at Xizhimen South Street)",

Address-"Floor #2, No.A-15-6, Xizhimen South Street, Xicheng District, Beijing",
Tag-"chain store", "convenient transport", "on-job meal", "Western style snack food, etc.,
Comment-"delicious", "popular", "suitable for parents and kids", etc.

The characters in the above descriptive texts are mapped by the international character vector representation dictionary to vector representations of the characters.

At 302a, the vector representations of respective characters of the query are input into the first neural network to obtain a vector representation of the query as output. At 302b, the vector representations of the characters in the descriptive texts of the geographic position are input into the second neural network to obtain the vector representation of the geographic position. As such, the vector representations of the geographic positions in the map database may be obtained respectively.

In the present disclosure, the types of the first neural network and second neural network are not limited, as long as the dimensions of vectors output by the two neural networks are kept consistent. For example, the two neural networks may employ CNN (Convolutional Neural Networks), and ERNIE (Enhanced Representation through kNowledge IntEgration). Additionally, it needs to be appreciated that the "first" and "second" etc. involved in embodiments of the present disclosure are only intended to distinguish terms and not to limit meanings such as order, number and degree of importance.

It is assumed that the query consists of a series of m characters $q_1$, $q_2$, ..., $q_m$, and the descriptive text of a certain geographic position consists of n characters, namely, $p_1$, $p_2$, ..., $p_n$. After the vector representations corresponding characters are obtained, vectors y and z having the same dimensions are respectively obtained through a neural network (assuming that G() is a neural network corresponding to the query, and H() is a neural network corresponding to the geographic position):

$$G(q_1, q_2, ..., q_m) = y$$

$$H(p_1, p_2, ..., p_n) = z$$

In addition, the vector representations of the geographic positions in the map database may be determined in real time during retrieval. However, preferably, it is possible to directly invoke a result during the retrieval after the vector representations are determined in advance, i.e., 301b and 302b are processes already performed offline in advance.

At 303, a similarity respectively between the vector representation of the query and a vector representation of each geographic position in the map database is determined. The similarity s between the vectors y and z may be quantized by using for example cosine similarity:

$$s = S(q_1, q_2, ..., q_m; p_1, p_2, ..., p_n)$$
$$= cosine(y, z)$$

At 304, the retrieved geographic position is determined based on the respective determined similarities. The similarity may be independently taken as a basis for ranking the geographic positions, or a non-independent manner may be employed, i.e., the similarity, as one of feature vectors, may be integrated into a conventional ranking model.

When the similarity is independently taken as the basis for ranking the geographic positions, the geographic positions may be ranked in a descending order of similarity, and the retrieved geographic position may be determined according to the ranking result. For example, top N geographic positions are selected as the retrieved geographic positions, N being a preset positive integer. Again for example, geographic positions with similarity exceeding a preset similarity threshold are selected as the retrieved geographic positions. As another example, the geographic positions are displayed in a descending order of the similarity, and the number of displayed geographic positions is determined according to the user's operation (e.g., a page can display five geographic positions, and next five geographic positions will be displayed if the user has an operation of pulling down to refresh).

When the non-independent manner is employed, a similarity feature may be determined using the similarity, the similarity feature may be taken as one of input vectors of a ranking model obtained by pre-training, and the retrieved geographic positions may be determined using the ranking model's ranking result of the geographic positions.

The following retrieval demands may be satisfied by the implementation method stated in the Embodiment 1.

Retrieval demand 1:

The user inputs the query "Eiffel Tower". Since the international character vector representation dictionary is used to map the characters in the query and characters in the descriptive text of the geographic position to the same vector space, even though the descriptive text employs the French name "La Tour Eiffel" or English name "Eiffel Tower", it can also be at very close distance in the same vector space, thereby realizing the cross-language geographic position retrieval demand.

Retrieval demand 2:

The user inputs the query "KFC". After the characters in the query and characters in the descriptive text of the geographic position are all mapped to the same vector space, the vector representation of the query and the vector representation of the geographic position are obtained using the vector representations of the characters. Even though the descriptive text employs the full name "Kentucky Fried Chicken", it can also be at very close distance in the same vector space, thereby realizing the semantics-based geographic position retrieval demand.

The similarity model needs to be trained in advance to implement the above Embodiment 1. The training process of the similarity model will be described in detail in conjunction with Embodiment 2 and Embodiment 3, respectively.

Embodiment 2

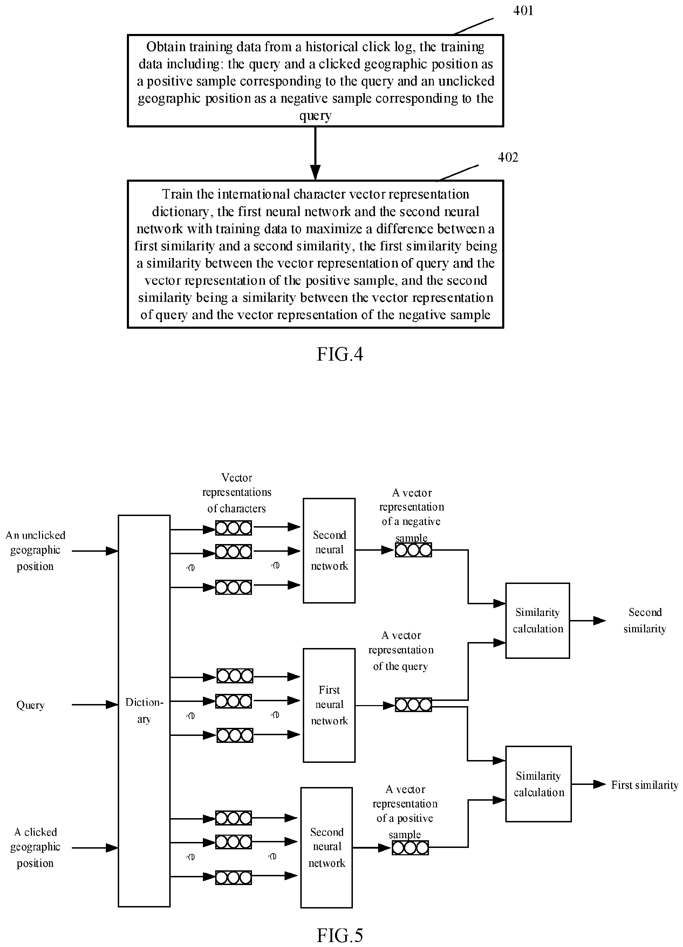

In the present embodiment, the historical click log is used to implement the training of the similarity model. The historical click log is a log regarding whether the user clicks the retrieved geographic position, generated based on a retrieval historical record. A process of training the similarity model according to the present embodiment may include the following steps as shown in FIG. 4:

At 401, training data is obtained from the historical click log, the training data including: the query and a clicked geographic position as a positive sample corresponding to the query and an unclicked geographic position as a negative sample corresponding to the query.

When the training data is obtained in the step, each piece of training data actually includes a sample pair including a positive sample and a negative sample. Regarding the same query, a clicked geographic position is selected from the retrieval result corresponding to the query as the positive sample, and then a geographic position is selected from the unclicked geographic positions as the negative sample.

For example, it is assumed that in the historical click log, the retrieval result corresponding to the query "KFC" includes the following geographic positions: KFC (Xizhimen Store), KFC (Huilongguan Store), KFC (Sanyuanqiao Store), etc. If the user clicks "KFC (Huilongguan Store)" and does not click geographic positions, one piece of training data may include: "KFC"-"KFC (Huilongguan Store)" as the positive sample pair, and "KFC"- KFC (Sanyuanqiao Store)" as the negative sample pair.

Many pieces of training data may be selected in this way.

At 402, the international character vector representation dictionary, the first neural network and the second neural network are trained with the training data to maximize a difference between a first similarity and a second similarity, wherein the first similarity is a similarity between the vector representation of the query and the vector representation of the positive sample, and the second similarity is a similarity between the vector representation of the query and the vector representation of the negative sample.

Specifically, it is possible to, as shown in FIG. 5, first use the international character vector representation dictionary ("Dictionary" in short in the figure) to respectively determine the vector representations of the characters in the training data, i.e., retrieve the vector representations of the characters in the query, the vector representations of the characters in the descriptive text of the clicked geographic position as the positive sample, and the vector representations of the characters in the descriptive text of the unclicked geographic position as the negative sample.

All characters herein, in whatever language, can be mapped by the international character vector representation dictionary to the same vector space. The vector representations of all characters all have the same dimensions.

Then, the vector representations of the characters in the query are input into the first neural network to obtain the vector representation of the query; the vector representations of the characters in the descriptive text of the geographic position as the positive sample and the vector representations of the characters in the descriptive text of the geographic position as the negative sample are respectively input into the second neural network, to obtain the vector representation of the positive sample and the vector representation of the negative sample. In the present disclosure, the types of the first neural network and second neural network are not limited, so long as the dimensions of vectors output by the two neural networks are kept consistent. For example, the two neural networks may employ CNN (Convolutional Neural Networks), and ERNIE (Enhanced Representation through kNowledge IntEgration).

Then, the first similarity between the vector representation of the query and the vector representation of the positive sample, and the second similarity between the vector representation of the same query and the vector representation of the negative sample are determined.

The international character vector representation dictionary, the first neural network and the second neural network may be trained with the first similarity and the second similarity to maximize the difference between the first similarity and the second similarity.

That is to say, a training target is to maximize the first similarity and minimize the second similarity to maximize the difference between the first similarity and the second similarity.

The training target may be represented as minimizing a loss function. The loss function Loss may employ for example:

$$Loss=\max[0, \gamma + \cosine(y, z^+) - \cosine(y, z^-)]$$

where y is the vector representation of the query, $z^+$ is the vector representation of the positive sample, $z^-$ is the vector representation of the negative sample, and $\gamma$ is a hyperparameter.

During training, the value of Loss is used to iteratively update the model parameters, including parameters of the international character vector representation dictionary, the first neural network and the second neural network until the training target is achieved. For example, the value of Loss satisfies a preset requirement, the iteration times satisfy a preset requirement, etc.

The model training method according to the present embodiment may breaks through the limitation of literal matching in geographic position retrieval to achieve the following retrieval demands:

For example, some geographic positions have joking names, short names or nicknames popular among users. If these names cannot be collected instantly and directed to a synonym dictionary, it is very difficult to achieve the geographic position retrieval actually needed by the user. For example, regarding KFC, many users jokingly call it "Kaifeng-style dish". With the manner provided by the present disclosure, when the users input the query "Kaifeng-style dish", if some users or more and more users click "KFC"-related geographic positions in the retrieval results of the geographic positions, similarity association between "KFC" and "Kaifeng-style dish" can be established during the above training process, so that during actual retrieval, when a user inputs the query "Kaifeng-style dish", the KFC-related geographic positions can be retrieved.

However, the similarity model obtained by training in the present embodiment is usually very dependent on existing queries and geographic positions having clicking history. Regarding frequently-appearing and clicked queries and geographic positions, the model has an excellent effect in the ranking of the retrieval results. However, regarding those sparsely-appearing queries and geographic positions, even queries and geographic positions that never appear, the model provides very undesirable retrieval results, i.e., fails to solve the problem of cold start of sparse historical click log. To solve the technical problem, the present disclosure further provides a preferred model training method, which will be described below in detail through Embodiment 3.

Embodiment 3

In order to enable the geographic positions with sparse click times, even never-clicked geographic positions (e.g., newly-appearing geographic positions) to gain a good retrieval ranking result, association between the existing geographic positions with a high click frequency and geographic positions with a low click frequency or never clicked is established from another perspective in the present embodiment. Therefore, in addition to the historical click log, a historical browse log is introduced in the training process of the model. The association between geographic positions is established through a browse co-occurrence relationship.

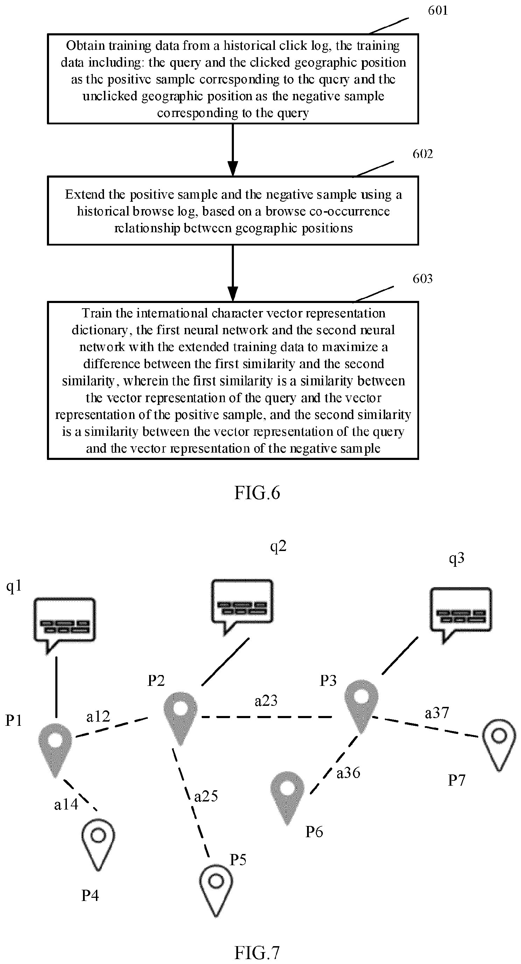

FIG. 6 illustrates a flow chart of a method for training a similarity model according to Embodiment 3 of the present disclosure. As shown in FIG. 6, the method may include the following steps:

At 601, training data is obtained from a historical click log, the training data including: the query and a clicked geographic position as a positive sample corresponding to the query and an unclicked geographic position as a negative sample corresponding to the query.

The step is identical with 401 in Embodiment 2 and will not be detailed any more here.

At 602, the positive sample and negative sample are extended using a historical browse log, based on a browse co-occurrence relationship between geographic positions.

In addition to the historical click log, the historical browse log is also introduced into the present disclosure. The historical browse log is obtained by the user by recording browsing behaviors of the geographic positions, and includes but not limited to: the user's browsing behaviors during the retrieval, random browsing behaviors upon looking up geographic positions in the map application, browsing behaviors performed through the information recommendation of the map application, etc.

FIG. 7 is taken as an example for illustration to provide more intuitive understanding. In FIG. 7, regarding the queries "q1", "q2" and "q3", there is a clicked geographic position P1 corresponding to q1, a clicked geographic position P2 corresponding to q2 and a clicked geographic position P3 corresponding to q3 in the historical click log. The click-based association is shown in a solid line in FIG. 7. However, it can be obtained based on the historical browse log that the user also browses P2 and P4 while browsing P1. It may be believed that P1 and P2 are in the browse co-occurrence relationship, and P1 and P3 are in the browse co-occurrence relationship. If a plurality of geographic positions are sequentially browsed in one session, it is believed that the plurality of geographic positions are in the co-occurrence relationship.

In FIG. 7, the association between geographic positions based on the browse cooccurrence relationship is represented with a dotted line. A semantic graph may be built using the association between the geographic positions based on the historical browse log to facilitate extending the samples. In the semantic graph, nodes are geographic positions, the association between geographic positions indicates that there is the browse co-occurrence relationship between the geographic positions, and association parameters also exist between the geographic positions. "a12" marked in FIG. 7 is an association parameter between P1 and P2, "a14" is an association parameter between P1 and P4, and "a23" is an association parameter between P2 and P3, and so on so forth. The association parameters reflect the browse co-occurrence relationship between the geographic positions, and may be initially determined based on the co-occurrence situations between corresponding geographic positions, e.g., determined based on the number of co-occurrence times. The larger the number of co-occurrence times is, the larger the corresponding association parameter value is. The association parameter value will also play a role in subsequent training process. For particulars, please refer to the depictions regarding step 603.

In this step, it is possible to respectively obtain, from the semantic graph, geographic positions in the browse co-occurrence relationship with the clicked geographic position to extend the positive sample, and obtain geographic positions in the browse co-occurrence relationship with the unclicked geographic position to extend the negative sample. The manner of extending the positive sample and negative sample using the semantic graph may directly look up the semantic graph for the browse cooccurrence relationship between geographic positions, and is more convenient and more efficient.

For example, regarding a piece of training data, q1-P1 is a positive sample pair, and q1-P7 is a negative sample pair. After extension, P1, P2 and P4 may be extended to constitute the geographic positions in the positive sample, and P7 and P3 may be extended to constitute geographic positions in the negative sample.

At 603, the international character vector representation dictionary, the first neural network and the second neural network are trained with the extended training data to maximize a difference between a first similarity and a second similarity, wherein the first similarity is a similarity between the vector representation of the query and the vector representation of the positive sample, and the second similarity is a similarity between the vector representation of the query and the vector representation of the negative sample.

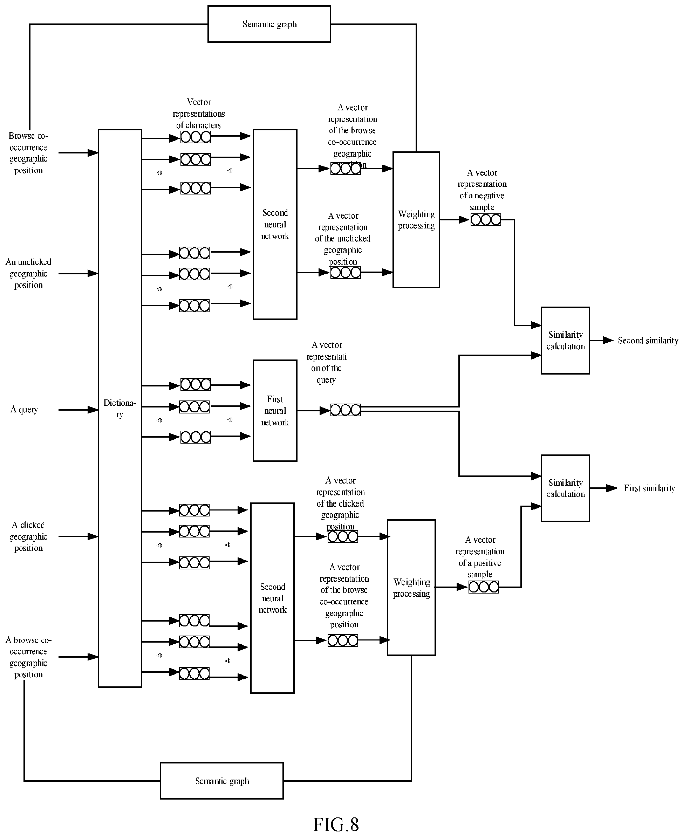

Specifically, it is possible to, as shown in FIG. 8, first use the international character vector representation dictionary to respectively determine the vector representations of the characters in the training data, i.e., retrieve the vector representations of the characters in the query, the vector representations of the characters in the descriptive texts of the clicked geographic position as the positive sample and geographic positions in the browse co-occurrence relationship with the clicked geographic position, and the vector representations of the characters in the descriptive texts of the unclicked geographic position as the negative sample and geographic positions in the browse co-occurrence relationship with the unclicked geographic position.

All characters herein, in whatever language, can be mapped by the international character vector representation dictionary to the same vector space. The vector representations of all characters all have the same dimensions.

Then, the vector representations of the characters in the query are input into the first neural network to obtain the vector representation of the query.

The vector representations of the characters in the description text of the clicked geographic position are input into the second neural network to obtain the vector representation of the unclicked geographic position, and the vector representations of characters in the descriptive texts of geographic positions (called browse co-occurrence geographic positions in the figure) in the browse co-occurrence relationship with the clicked geographic position are respectively input into the second neural network to obtain the vector representations corresponding to the browse co-occurrence geographic positions. Weighting processing is performed on the vector representations of the geographic positions output by the second neural network according to the association parameters between corresponding geographic positions in the semantic graph, to obtain the vector representation of the positive sample.

The semantic graph shown in FIG. 7 is still taken as an example. The positive-sample geographic positions corresponding to q1 includes P1, P2 and P4. After obtaining the vector representation V1 of P1, vector representation V2 of P2 and vector representation V4 of P4, respectively, the second neural network may perform the following weighting processing to obtain the vector representation $z^+$ of the positive sample:

$$z^+=V1+a12*V2+a14*V4.$$

The vector representations of the characters in the descriptive text of the unclicked geographic position, and vector representations of the characters in the descriptive texts of geographic positions in the browse co-occurrence relationship with the unclicked geographic position are respectively input into the second neural network, and weighing processing is performed on the vector representations of geographic positions output by the second neural network according to the association parameters between corresponding geographic positions in the semantic graph, to obtain the vector representation of the negative sample.

Continuing with the above example, negative-sample geographic positions corresponding to q1 include P7 and P3, and the second neural network respectively obtain the vector representation V7 of P7, and vector representation V3 of P3. Weighting processing is performed according to the semantic graph shown in FIG. 7 to obtain the vector representation z⁻ of the negative sample.

$$z^-=V7+a37*V3$$

Then, determination is made as to the first similarity between the vector representation of the query and the vector representation of the positive sample, and the second similarity between the vector representation of the same query and the vector representation of the negative sample.

The international character vector representation dictionary, the first neural network and the second neural network may be trained with the first similarity and the second similarity to maximize the difference between the first similarity and the second similarity.

That is to say, a training target is to maximize the first similarity and minimize the second similarity to maximize the difference between the first similarity and the second similarity.

The training target may be represented as minimizing a loss function. The loss function Loss may employ for example:

$$\text{Loss}=\max[0,\ \gamma + \ \cosine(y, z^+) - \ \cosine(y, z^-)]$$

where y is the vector representation of the query, z⁺is the vector representation of the positive sample, z⁻ is the vector representation of the negative sample, and γ is a hyperparameter.

During training, the value of Loss is used to iteratively update the model parameters, including parameters of the international character vector representation dictionary, the first neural network and the second neural network until the training target is achieved. For example, the value of Loss satisfies a preset requirement, the iteration times satisfy a preset requirement, etc.

The association parameters in the semantic graph will also be updated during training, so that the association relationship between the geographic positions based on the browse co-occurrence is gradually optimized to achieve the training target.

The model training method according to the present embodiment may solve the problem of the cold start of geographic position retrieval corresponding to the coefficient of click times, and already meet for example the following retrieval demands:

Regarding some newly-appearing geographic positions, for example, "KFC (Huilongguan Store) is a newly-opened store, since initially it does not appear in the historical click log or the number of click times is very small, it is very difficult to obtain the new geographic position by retrieving through the model built in Embodiment 2. However, in the model building manner of Embodiment 3, during use of the map by browsing the map, he simultaneously browses the geographic position "KFC (Xizhimen Store" that has already appear very long in a session and meanwhile browses "KFC (Huilongguan Store)", or browses "KFC (Xizhimen Store)" and "KFC (Huilongguan Store)" simultaneously in the information recommending function of the map application. Then, the association between the geographic position "KFC (Xizhimen Store)" and "KFC (Huilongguan Store)" is established in the semantic graph. Since "KFC (Xizhimen Store)" is a geographic position that has already appeared very long and has been clicked many times in history, during the establishment of the similarity model and during the training of "KFC (Xizhimen Store)" as the positive sample, "KFC (Huilongguan Store)" also does contribution to the vector of the positive sample such that "KFC (Huilongguan Store)" also establish an association with the query "KFC" of "KFC (Xizhimen Store)". In this case, when the user retrieve "KFC", he can also find "KFC (Huilongguan Store)" in the retrieval result based on the similarity, thereby solving the problem of cold start of "KFC (Huilongguan Store)".

The method according to the present disclosure is described in detail above. An apparatus according to the present disclosure will be described below in detail in conjunction with embodiments.

Embodiment 4

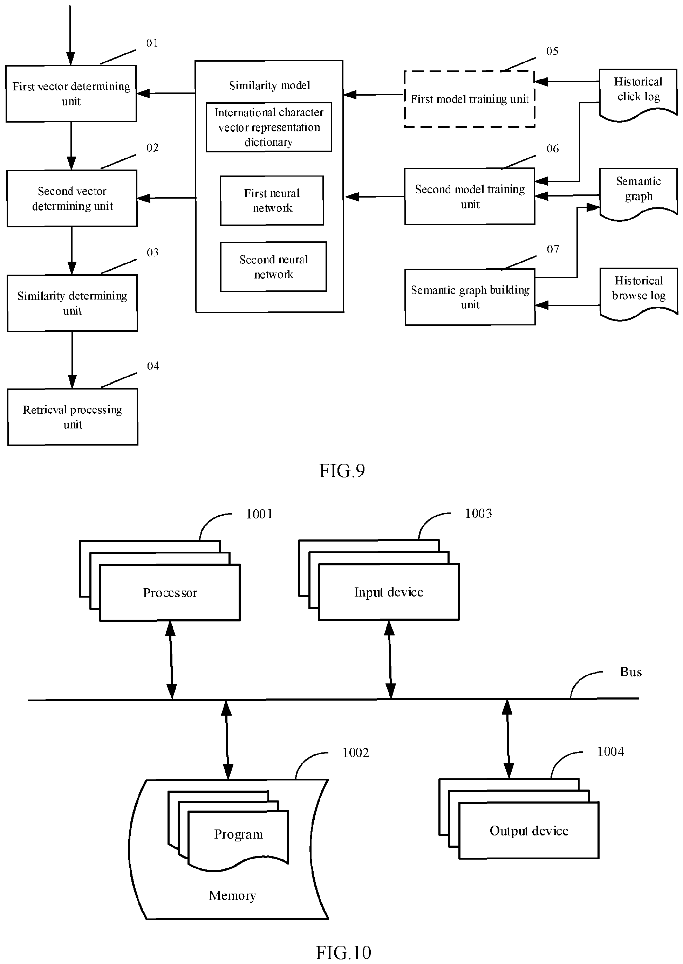

FIG. 9 illustrates a block diagram of an apparatus for retrieving geographic positions according to embodiments of the present disclosure. The apparatus may be an application located at the server end, or a function unit such as a plug-in or a Software Development Kit (SDK) of the application located at the server end, which will not specifically be limited in this regard. As shown in FIG. 9, the apparatus includes a first vector determining unit 01, a second vector determining unit 02, a similarity determining unit 03 and a retrieval processing unit 04, and may further include: a first model training unit 05 or a second model training unit 06. Main functions of the units are as follows:
The first vector determining unit 01 is configured to respectively determine a vector representation of each character in a query input by a user using an international character vector representation dictionary, the international character vector representation dictionary being used to map characters of at least two languages to the same vector space.

The second vector determining unit 02 is configured to input vector representations of respective characters in the query into a first neural network obtained by pre-training, to obtain a vector representation of the query.

The similarity determining unit 03 is configured to determine a similarity respectively between the vector representation of the query and a vector representation of each geographic position in a map database.

The vector representation of each geographic position is obtained by using the first vector determining unit 01 to use the international character vector representation dictionary to determine vector representations of characters in descriptive texts of the geographic positions, and then using the second vector determining unit 02 to input the vector representations of the characters in the descriptive texts of the geographic positions into a second neural network obtained by pre-training. The vector representations of the geographic positions may be determined in real time during retrieval of the geographic positions. However, as a preferred embodiment, the vector representations of the geographic positions may be obtained in an offline manner, and then the similarity determining unit 03 invokes, in real time, the vector representations of geographic positions in the map data obtained offline during retrieval.

The descriptive texts of geographic positions may include at least one type of name, tag, address, comment and picture descriptive text.

The retrieval processing unit 04 is configured to determine a retrieved geographic position according to respective similarities.

Specifically, the retrieval processing unit 04 may rank the geographic positions in a descending order of similarity, and determine the retrieved geographic position according to a ranking result.

Alternatively, the retrieval processing unit 04 may determine a similarity feature using the similarity, take the similarity feature as one of input vectors of a ranking model obtained by pre-training, and determine the retrieved geographic position using the ranking result of the geographic positions by the ranking model.

The first model training unit 05 and the second model training unit 06 are configured to pre-train the similarity model consisting of the international character vector representation dictionary, the first neural network and the second neural network. One of the first model training unit 05 and the second model training unit 06 may be employed in the present disclosure.

The first model training unit 05 is configured to perform the following training process in advance:

obtaining training data from a historical click log, the training data including: the query and a clicked geographic position as a positive sample corresponding to the query and an unclicked geographic position as a negative sample corresponding to the query;

training the international character vector representation dictionary, the first neural network and the second neural network with the training data to maximize a difference between a first similarity and a second similarity, wherein the first similarity is a similarity between the vector representation of the query and the vector representation of the positive sample, and the second similarity is a similarity between the vector representation of the query and the vector representation of the negative sample.

Specifically, when training the international character vector representation dictionary, the first neural network and the second neural network with the training data, the first model training unit 05 may perform:

using the international character vector representation dictionary to respectively determine the vector representations of the characters in the training data;

inputting the vector representations of the characters in the query into the first neural network to obtain the vector representation of the query; inputting the vector representations of the characters in the descriptive text of the geographic position as the positive sample and the vector representations of the characters in the descriptive text of the geographic position as the negative sample respectively into the second neural network, to obtain the vector representation of the positive sample and the vector representation of the negative sample.

determining the first similarity between the vector representation of the query and the vector representation of the positive sample, and the second similarity between the vector representation of the same query and the vector representation of the negative sample;

training the international character vector representation dictionary, the first neural network and the second neural network to maximize a difference between the first similarity and the second similarity.

The second model training unit 06 is configured to perform the following training process in advance:

obtaining training data from the historical click log, the training data including: the query and the clicked geographic position as the positive sample corresponding to the query and the unclicked geographic position as the negative sample corresponding to the query;

extending the positive sample and negative sample using a historical browse log, based on a browse co-occurrence relationship between geographic positions;

training the international character vector representation dictionary, the first neural network and the second neural network with the extended training data to maximize a difference between the first similarity and the second similarity, wherein the first similarity is a similarity between the vector representation of the query and the vector representation of the positive sample, and the second similarity is a similarity between the vector representation of the query and the vector representation of the negative sample.

Specifically, the second model training unit 06 may respectively obtain, from the sematic graph, first geographic positions in the browse co-occurrence relationship with the clicked geographic position to extend the positive sample, and obtain second geographic positions in the browse co-occurrence relationship with the unclicked geographic position to extend the negative sample.

When training the international character vector representation dictionary, the first neural network and the second neural network with the extended training data, the second model training unit 06 may specifically perform the following:

using the international character vector representation dictionary to respectively determine the vector representations of the characters in the training data;

inputting the vector representations of the characters in the query into the first neural network to obtain the vector representation of the query; inputting the vector representations of the characters in the description text of the clicked geographic position and vector representations of the characters in the descriptive texts of the first geographic positions respectively into the second neural network, and performing weighting processing on the vector representations of the geographic positions output by the second neural network according to association parameters between corresponding geographic positions in the semantic graph, to obtain the vector representation of the positive sample;

inputting the vector representations of the characters in the description texts of the unclicked geographic position and vector representations of the characters in the descriptive texts of the second geographic positions respectively into the second neural network, and performing weighting processing on the vector representations of the geographic positions output by the second neural network according to association parameters between corresponding geographic positions in the semantic graph, to obtain the vector representation of the negative sample;

determining the first similarity between the vector representation of the query and the vector representation of the positive sample, and the second similarity between the vector representation of the same query and the vector representation of the negative sample;

training the international character vector representation dictionary, the sematic graph, the first neural network and the second neural network to maximize a difference between the first similarity and the second similarity.

In the case where the second model training unit 06 is employed, the apparatus further comprises:
a sematic graph building unit 07 configured to build a sematic graph based on a historical browse log, nodes in the sematic graph being geographic positions, association between corresponding nodes being established for geographic positions in the browse co-occurrence relationship, association parameters between the geographic positions being initially determined according to co-occurrence situations between the geographic positions.

Correspondingly, the second model training unit 06 updates the association parameters between geographic positions in the sematic graph during training.

In addition to obtaining the training data from the historical click log, the second model training unit 06 further obtains the training data from the historical browse log, and extends the positive sample and negative sample in the training data based on the browse co-occurrence relationship, thereby solving the problem of the cold start of geographic position retrieval corresponding to the coefficient of click times. Therefore, the second model training unit 06 is preferably employed in the present disclosure. Therefore, the first model training unit 05 is represented in a dotted line in FIG. 9.

According to embodiments of the present disclosure, the present disclosure further provides an electronic device and a readable storage medium.

As shown in FIG. 10, it shows a block diagram of an electronic device for implementing the method for retrieving geographic positions according to embodiments of the present disclosure. The electronic device is intended to represent various forms of digital computers, such as laptops, desktops, workstations, personal digital assistants, servers, blade servers, mainframes, and other appropriate computers. The electronic device is further intended to represent various forms of mobile devices, such as personal digital assistants, cellular telephones, smartphones, wearable devices and other similar computing devices. The components shown here, their connections and relationships, and their functions, are meant to be exemplary only, and are not meant to limit implementations of the inventions described and/or claimed in the text here.

As shown in FIG. 10, the electronic device comprises: one or more processors 1001, a memory 1002, and interfaces configured to connect components and including a high-speed interface and a low speed interface. Each of the components are interconnected using various busses, and may be mounted on a common motherboard or in other manners as appropriate. The processor can process instructions for execution within the electronic device, including instructions stored in the memory or on the storage device to display graphical information for a GUI on an external input/output device, such as a display device coupled to the interface. In other implementations, multiple processors and/or multiple buses may be used, as appropriate, along with multiple memories and types of memory. Also, multiple electronic devices may be connected, with each device providing portions of the necessary operations (e.g., as a server bank, a group of blade servers, or a multi-processor system). One processor 1001 is taken as an example in FIG. 10.

The memory 1002 is a non-transitory computer-readable storage medium provided by the present disclosure. The memory stores instructions executable by at least one processor, so that the at least one processor executes the method for retrieving geographic positions according to the present disclosure. The non-transitory computer-readable storage medium of the present disclosure stores computer instructions, which are used to cause a computer to execute the method for retrieving geographic positions according to the present disclosure.

The memory 1002 is a non-transitory computer-readable storage medium and can be used to store non-transitory software programs, non-transitory computer executable programs and modules, such as program instructions/modules corresponding to the method for retrieving geographic positions in embodiments of the present disclosure. The processor 1001 executes various functional applications and data processing of the server, i.e., implements the method for retrieving geographic positions in the above method embodiments, by running the non-transitory software programs, instructions and modules stored in the memory 1002.

The memory 1002 may include a storage program region and a storage data region, wherein the storage program region may store an operating system and an application program needed by at least one function; the storage data region may store data created according to the use of the electronic device. In addition, the memory 1002 may include a high-speed random access memory, and may also include a non-transitory memory, such as at least one magnetic disk storage device, a flash memory device, or other non-transitory solid-state storage device. In some embodiments, the memory 1002 may optionally include a memory remotely arranged relative to the processor 1001, and these remote memories may be connected to the electronic device through a network. Examples of the above network include, but are not limited to, the Internet, an intranet, a local area network, a mobile communication network, and combinations thereof.

The electronic device for implementing the method for retrieving geographic positions may further include an input device 1003 and an output device 1004. The processor 1001, the memory 1002, the input device 1003 and the output device 1004 may be connected through a bus or in other manners. In FIG. 10, the connection through the bus is taken as an example.

The input device 1003 may receive inputted numeric or character information and generate key signal inputs related to user settings and function control of the electronic device, and may be an input device such as a touch screen, keypad, mouse, trackpad, touchpad, pointing stick, one or more mouse buttons, trackball and joystick. The output device 1004 may include a display device, an auxiliary lighting device (e.g., an LED), a haptic feedback device (for example, a vibration motor), etc. The display device may include but not limited to a Liquid Crystal Display (LCD), a Light Emitting Diode (LED) display, and a plasma display. In some embodiments, the display device may be a touch screen.

Various implementations of the systems and techniques described here may be realized in digital electronic circuitry, integrated circuitry, specially designed ASICs (Application Specific Integrated Circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to send data and instructions to, a storage system, at least one input device, and at least one output device.

These computer programs (also known as programs, software, software applications or code) include machine instructions for a programmable processor, and may be implemented in a high-level procedural and/or object-oriented programming language, and/or in assembly/machine language. As used herein, the terms "machine-readable medium" and "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here may be implemented on a computer having a display device (e.g., a CRT (cathode ray tube) or LCD (liquid crystal display) monitor) for displaying information to the user and a keyboard and a pointing device (e.g., a mouse or a trackball) by which the user may provide input to the computer. Other kinds of devices may be used to provide for interaction with a user as well; for example, feedback provided to the user may be any form of sensory feedback (e.g., visual feedback, auditory feedback, or tactile feedback); and input from the user may be received in any form, including acoustic, speech, or tactile input.

The systems and techniques described here may be implemented in a computing system that includes a back end component (e.g., as a data server), or that includes a middleware component (e.g., an application server), or that includes a front end component (e.g., a client computer having a graphical user interface or a Web browser through which a user may interact with an implementation of the systems and techniques described here), or any combination of such back end, middleware, or front end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

It should be understood that the various forms of processes shown above can be used to reorder, add, or delete steps. For example, the steps described in the present disclosure can be performed in parallel, sequentially, or in different orders as long as the desired results of the technical solutions disclosed in the present disclosure can be achieved, which is not limited herein.

**Claims**

1. A method for retrieving geographic positions, comprising

   obtaining a query input by a user, respectively determining (301a) a vector representation of each character in the query using an international character vector representation dictionary, and mapping (301b) characters in descriptive texts of geographic positions in a map database to vector representations of the characters by the international character vector representation dictionary, the international character vector representation dictionary being used to map characters of at least two languages to the same vector space using a mapping function;
   inputting (302a) the vector representations of respective characters in the query into a first neural network obtained by pre-training, to obtain a vector representation of the query, and inputting (302b) the vector representations of the characters in the descriptive texts of the geographic positions into a second neural network obtained by pre-training to obtain the vector representations of the geographic positions;
   determining (303), by using cosine similarity, a similarity respectively between the vector representation of the query and a vector representation of each geographic position in a map database;
   determining (304) a retrieved geographic position according to respective similarities.

2. The method according to claim 1, wherein the descriptive texts of geographic positions comprise at least one type of name, tag, address, comment and picture descriptive text.

3. The method according to claim 1, wherein the determining the retrieved geographic position according to respective similarities comprises:

   ranking the geographic positions in a descending order of similarity, and determining the retrieved geographic position according to a ranking result; or
   determining a similarity feature using the similarity, taking the similarity feature as one of input vectors of a ranking model obtained by pre-training, and determining the retrieved geographic position using the ranking result of the geographic positions by the ranking model.

4. The method according to claim 1, wherein the method further comprises performing the following training process in advance:

obtaining training data from a historical click log, the training data including: the query and a clicked geographic position as a positive sample corresponding to the query and an unclicked geographic position as a negative sample corresponding to the query;

training the international character vector representation dictionary, the first neural network and the second neural network with the training data to maximize a difference between a first similarity and a second similarity, the first similarity being a similarity between the vector representation of the query and a vector representation of the positive sample, and the second similarity being a similarity between the vector representation of the query and a vector representation of the negative sample, preferably

the training the international character vector representation dictionary, the first neural network and the second neural network with the training data comprises:

using the international character vector representation dictionary to respectively determine vector representations of characters in the training data;

inputting the vector representations of the characters in the query into the first neural network to obtain the vector representation of the query; inputting the vector representations of the characters in the descriptive texts of the geographic position as the positive sample and the vector representations of the characters in the descriptive texts of the geographic position as the negative sample respectively into the second neural network, to obtain the vector representations of the positive sample and the vector representation of the negative sample;

determining the first similarity between the vector representation of the query and the vector representation of the positive sample, and the second similarity between the vector representation of the same query and the vector representation of the negative sample;

training the international character vector representation dictionary, the first neural network and the second neural network to maximize a difference between the first similarity and the second similarity.

5. The method according to claim 1, wherein the method further comprises performing the following training process in advance:

obtaining training data from a historical click log, the training data including: the query and the clicked geographic position as the positive sample corresponding to the query and the unclicked geographic position as the negative sample corresponding to the query;

extending the positive sample and negative sample using a historical browse log, based on a browse co-occurrence relationship between geographic positions;

training the international character vector representation dictionary, the first neural network and the second neural network with the extended training data to maximize a difference between a first similarity and a second similarity, wherein the first similarity is a similarity between the vector representation of the query and the vector representation of the positive sample, and the second similarity is a similarity between the vector representation of the query and the vector representation of the negative sample, preferably

the extending the positive sample and negative sample using a historical browse log, based on a browse co-occurrence relationship between geographic positions comprises:

respectively obtaining, from a sematic graph, first geographic positions in a browse co-occurrence relationship with the clicked geographic position to extend the positive sample, and obtaining second geographic positions in the browse cooccurrence relationship with the unclicked geographic position to extend the negative sample, preferably

the training the international character vector representation dictionary, the first neural network and the second neural network with the extended training data comprises:

using the international character vector representation dictionary to respectively determine vector representations of characters in the training data;

inputting the vector representations of the characters in the query into the first neural network to obtain a vector representation of the query; inputting the vector representations of the characters in the description texts of the clicked geographic position and vector representations of the characters in the descriptive texts of the first geographic positions respectively into the second neural network, and performing weighting processing on the vector representations of the geographic positions output by the second neural network according to association parameters between corresponding geographic positions in the semantic graph, to obtain the vector representation of the positive sample; inputting the vector representations of the characters in the description texts of the unclicked geographic position and vector representations of the characters in the descriptive texts of the second geographic positions respectively into the second neural network, and performing weighting processing on the vector representations of the geographic positions output by the second neural network according to association parameters between corresponding geographic positions in the semantic graph, to obtain the vector representation of the negative sample;

determining a first similarity between the vector representation of the query and the vector representation of the positive sample, and a second similarity between the vector representation of the same query and the vector representation of the negative sample;

training the international character vector representation dictionary, the sematic graph, the first neural network and the second neural network to maximize a difference between the first similarity and the second similarity.

6. The method according to claim 5, wherein the sematic graph is built based on a historical browse log; nodes in the sematic graph are geographic positions, association between corresponding nodes is established for geographic positions in the browse cooccurrence relationship, and association parameters between the geographic positions are initially determined according to co-occurrence situations between the geographic positions and updated during training.

7. An apparatus for retrieving geographic positions, the apparatus comprises:

a first vector determining unit (01) configured to obtain a query input by a user, respectively determine a vector representation of each character in the query using an international character vector representation dictionary, and map characters in descriptive texts of geographic positions in a map database to vector representations of the characters by the international character vector representation dictionary, the international character vector representation dictionary being used to map characters of at least two languages to the same vector space using a mapping function;

a second vector determining unit (02) configured to input vector representations of respective characters in the query into a first neural network obtained by pre-training, to obtain a vector representation of the query, and input the vector representations of the characters in the descriptive texts of the geographic position into a second neural network obtained by pre-training to obtain the vector representation of the geographic position;

a similarity determining unit (03) configured to determine, by using cosine similarity, a similarity respectively between the vector representation of the query and a vector representation of each geographic position in a map database;

a retrieval processing unit (04) configured to determine a retrieved geographic position according to respective similarities.

8. The apparatus according to claim 7, wherein the descriptive texts of geographic positions comprise at least one type of name, tag, address, comment and picture descriptive text.

9. The apparatus according to claim 7, wherein the retrieval processing unit (04) is specifically configured to:

rank the geographic positions in a descending order of similarity, and determine the retrieved geographic position according to a ranking result; or

determine a similarity feature using the similarity, take the similarity feature as one of input vectors of a ranking model obtained by pre-training, and determine the retrieved geographic position using the ranking result of the geographic positions by the ranking model.

10. The apparatus according to claim 7, wherein the apparatus further comprises:

a first model training unit (05) configured to perform the following training process in advance:

obtaining training data from a historical click log, the training data including: the query and a clicked geographic position as a positive sample corresponding to the query and an unclicked geographic position as a negative sample corresponding to the query;

training the international character vector representation dictionary, the first neural network and the second neural network with the training data to maximize a difference between a first similarity and a second similarity, the first similarity being a similarity between the vector representation of the query and the vector representation of the positive sample, and the second similarity being a similarity between the vector representation of the query and the vector representation of the negative sample, preferably

when training the international character vector representation dictionary, the first neural network and the second neural network with the training data, the first model training unit performs:

using the international character vector representation dictionary to respectively determine vector representations of characters in the training data;
inputting the vector representations of the characters in the query into the first neural network to obtain the vector representation of the query; inputting the vector representations of the characters in the descriptive texts of the geographic position as the positive sample and the vector representations of the characters in the descriptive texts of the geographic position as the negative sample respectively into the second neural network, to obtain the vector representation of the positive sample and the vector representation of the negative sample;
determining the first similarity between the vector representation of the query and the vector representation of the positive sample, and the second similarity between the vector representation of the same query and the vector representation of the negative sample;
training the international character vector representation dictionary, the first neural network and the second neural network to maximize a difference between the first similarity and the second similarity.

11. The apparatus according to claim 7, wherein the apparatus further comprises:

a second model training unit (06) configured to perform the following training process in advance:

obtaining training data from a historical click log, the training data including: the query and the clicked geographic position as the positive sample corresponding to the query and the unclicked geographic position as the negative sample corresponding to the query;
extending the positive sample and negative sample using a historical browse log, based on a browse co-occurrence relationship between geographic positions;
training the international character vector representation dictionary, the first neural network and the second neural network with the extended training data to maximize a difference between a first similarity and a second similarity, wherein the first similarity is a similarity between the vector representation of the query and the vector representation of the positive sample, and the second similarity is a similarity between the vector representation of the query and the vector representation of the negative sample, preferably
the second model training unit (06) is specifically configured to respectively obtain, from a sematic graph, first geographic positions in a browse co-occurrence relationship with the clicked geographic position to extend the positive sample, and obtain second geographic positions in the browse co-occurrence relationship with the unclicked geographic position to extend the negative sample, preferably

when training the international character vector representation dictionary, the first neural network and the second neural network with the extended training data, the second model training unit (06) performs:

using the international character vector representation dictionary to respectively determine vector representations of characters in the training data;
inputting the vector representations of the characters in the query into the first neural network to obtain a vector representation of the query; inputting the vector representations of the characters in the description texts of the clicked geographic position and vector representations of the characters in the descriptive texts of the first geographic positions respectively into the second neural network, and performing weighting processing on the vector representations of the geographic positions output by the second neural network according to association parameters between corresponding geographic positions in the semantic graph, to obtain the vector representation of the positive sample; inputting the vector representations of the characters in the description texts of the unclicked geographic position and vector representations of the characters in the descriptive texts of the second geographic positions respectively into the second neural network, and performing weighting processing on the vector representations of the geographic positions output by the second neural network according to association parameters between corresponding geographic positions in the semantic graph, to obtain the vector representation of the negative sample;
determining a first similarity between the vector representation of the query and the vector representation of the positive sample, and a second similarity between the vector representation of the same query and the vector representation of the negative sample;

training the international character vector representation dictionary, the sematic graph, the first neural network and the second neural network to maximize a difference between the first similarity and the second similarity.

**12.** The apparatus according to claim 11, wherein the apparatus further comprises:

a sematic graph building unit (07) configured to build the sematic graph based on a historical browse log, nodes in the sematic graph being geographic positions, association between corresponding nodes being established for geographic positions in the browse co-occurrence relationship, association parameters between the geographic positions being initially determined according to co-occurrence situations between the geographic positions;

the second model training unit (06) updates the association parameters between geographic positions in the sematic graph during training.

**13.** An electronic device, wherein the electronic device comprises:

at least one processor; and

a memory communicatively connected with the at least one processor; wherein,

the memory stores instructions executable by the at least one processor, and the instructions are executed by the at least one processor to cause the at least one processor to perform the method according to any of claims 1-6.

**14.** A non-transitory computer-readable storage medium storing computer instructions therein, wherein the computer instructions are used to cause the computer to perform the method according to any of claims 1-6.

**15.** A computer program product comprising instructions which, when the program is executed by a computer, cause the computer to perform the method according to any of claims 1-6.

**Patentansprüche**

**1.** Verfahren zum Abrufen geografischer Positionen, das umfasst:

Erhalten einer Abfrageeingabe von einem Benutzer, jeweils Bestimmen (301a) einer Vektordarstellung jedes Zeichens in der Abfrage unter Verwendung eines internationalen Wörterbuchs für Zeichenvektordarstellung, und Abbilden (301b) von Zeichen in beschreibenden Texten geographischer Positionen in einer Kartendatenbank auf Vektordarstellungen der Zeichen mittels des internalen Wörterbuchs für Zeichenvektordarstellung, wobei das internalen Wörterbuch für Zeichenvektordarstellung dazu verwendet wird, Zeichen von mindestens zwei Sprachen auf denselben Vektorraum unter Verwendung einer Abbildungsfunktion abzubilden;

Eingeben (302a) der Vektordarstellungen der jeweiligen Zeichen in der Abfrage in ein erstes neuronales Netzwerk, das durch ein Vortraining erhalten wird, um eine Vektordarstellung der Abfrage zu erhalten, und Eingeben (302b) der Vektordarstellungen der Zeichen in den beschreibenden Texten der geographischen Positionen in ein zweites neuronales Netzwerk, das durch ein Vortraining erhalten wird, um die Vektordarstellungen der geographischen Positionen zu erhalten;

Bestimmen (303), unter Verwendung von Kosinus-Ähnlichkeit, einer Ähnlichkeit jeweils zwischen der Vektordarstellung der Abfrage und einer Vektordarstellung jeder geographischen Position in einer Kartendatenbank;

Bestimmen (304) einer abgerufenen geographischen Position entsprechend jeweiligen Ähnlichkeiten.

**2.** Verfahren nach Anspruch 1, wobei die beschreibenden Texte geographischer Positionen mindestens eine Art von Namen, Tag, Adresse, Kommentar und bildbeschreibendem Text umfassen.

**3.** Verfahren nach Anspruch 1, wobei das Bestimmen der abgerufenen geographischen Position entsprechend jeweiligen Ähnlichkeiten umfasst:

Erstellen eines Rankings der geographischen Position in absteigender Reihenfolge der Ähnlichkeit, und Bestimmen der abgerufenen geographischen Position entsprechend einem Ranking-Ergebnis; oder
Bestimmen eines Ähnlichkeitsmerkmals unter Verwendung der Ähnlichkeit, Verwenden des Ähnlichkeitsmerkmals als einen der Eingabevektoren eines Ranking-Modells, das durch ein Vortraining erhalten wird, und Bestimmen der abgerufenen geographischen Position unter Verwendung des Ranking-Ergebnisses der geographischen Positionen mittels des Ranking-Modells.

4. Verfahren nach Anspruch 1, wobei das Verfahren ferner das Durchführen des folgenden Trainingsprozesses im Vorfeld umfasst:

Erhalten von Trainingsdaten aus einem historischen Klickprotokoll, wobei die Trainingsdaten umfassen: die Abfrage und eine angeklickte geographische Position als positives Beispiel, das der Abfrage entspricht, und eine nicht angeklickte geografische Position als negatives Beispiel, das der Abfrage entspricht;
Trainieren des internationalen Wörterbuchs für Zeichenvektordarstellung, des ersten neuronalen Netzwerks und des zweiten neuronalen Netzwerks mit den Trainingsdaten, um eine Differenz zwischen einer ersten Ähnlichkeit und einer zweiten Ähnlichkeit zu maximieren, wobei vorzugsweise die erste Ähnlichkeit eine Ähnlichkeit zwischen der Vektordarstellung der Abfrage und einer Vektordarstellung des positiven Beispiels ist, und die zweite Ähnlichkeit eine Ähnlichkeit zwischen der Vektordarstellung der Abfrage und einer Vektordarstellung des negativen Beispiels ist,
wobei das Training des internationalen Wörterbuchs für Zeichenvektordarstellung, des ersten neuronalen Netzwerks und des zweiten neuronalen Netzwerks mit den Trainingsdaten umfasst:

Verwenden des internationalen Wörterbuchs für Zeichenvektordarstellung, um jeweils die Vektordarstellungen von Zeichen in den Trainingsdaten zu bestimmen;
Eingeben der Vektordarstellungen der Zeichen in der Abfrage in das erste neuronale Netzwerk, um die Vektordarstellung der Abfrage zu erhalten; Eingeben der Vektordarstellungen der Zeichen in den beschreibenden Texten der geographischen Position als positives Beispiel und der Vektordarstellungen der Zeichen in den beschreibenden Texten der geographischen Position als negatives Beispiel jeweils in das neuronale Netzwerk, um die Vektordarstellungen des positiven Beispiels und die Vektordarstellungen des negativen Beispiels zu erhalten;
Bestimmen der ersten Ähnlichkeit zwischen der Vektordarstellung der Abfrage und der Vektordarstellung des positiven Beispiels, und der zweiten Ähnlichkeit zwischen der Vektordarstellung derselben Abfrage und der Vektordarstellung des negativen Beispiels;
Trainieren des internationalen Wörterbuchs für Zeichenvektordarstellung, des ersten neuronalen Netzwerks und des zweiten neuronalen Netzwerks, um eine Differenz zwischen der ersten Ähnlichkeit und der zweiten Ähnlichkeit zu maximieren.

5. Verfahren nach Anspruch 1, wobei das Verfahren ferner das Durchführen des folgenden Trainingsprozesses im Vorfeld umfasst:

Erhalten von Trainingsdaten aus einem historischen Klickprotokoll, wobei die Trainingsdaten umfassen: die Abfrage und die angeklickte geographische Position als positives Beispiel, das der Abfrage entspricht, und die nicht angeklickte geografische Position als negatives Beispiel, das der Abfrage entspricht;
Erweitern des positiven Beispiels und des negativen Beispiels unter Verwendung eines historischen Browsing-Protokolls basierend auf einer Browsing-Kookkurrenz-Beziehung zwischen geographischen Positionen;
Trainieren des internationalen Wörterbuchs für Zeichenvektordarstellung, des ersten neuronalen Netzwerks und des zweiten neuronalen Netzwerks mit den erweiterten Trainingsdaten, um eine Differenz zwischen einer ersten Ähnlichkeit und einer zweiten Ähnlichkeit zu maximieren, wobei vorzugsweise die erste Ähnlichkeit eine Ähnlichkeit zwischen der Vektordarstellung der Abfrage und einer Vektordarstellung des positiven Beispiels ist, und die zweite Ähnlichkeit eine Ähnlichkeit zwischen der Vektordarstellung der Abfrage und einer Vektordarstellung des negativen Beispiels ist,
wobei das Erweitern des positiven Beispiels und des negativen Beispiels unter Verwendung eines historischen Browsing-Protokolls basierend auf einer Browsing-Kookkurrenz-Beziehung zwischen geographischen Positionen umfasst:

jeweils Erhalten, von einem semantischen Graphen, erster geographischer Positionen in einer Browsing-Kookkurrenz-Beziehung mit der angeklickten geographischen Position, um das positive Beispiel zu erweitern, und Erhalten zweiter geographischer Positionen in der Browsing-Kookkurrenz-Beziehung mit der nicht angeklickten geographischen Position, um das negative Beispiel zu erweitern,
wobei das Training des internationalen Wörterbuchs für Zeichenvektordarstellung, des ersten neuronalen Netzwerks und des zweiten neuronalen Netzwerks mit den erweiterten Trainingsdaten umfasst:

Verwenden des internationalen Wörterbuchs für Zeichenvektordarstellung, um jeweils Vektordarstellungen von Zeichen in den Trainingsdaten zu bestimmen;

Eingeben der Vektordarstellungen der Zeichen in der Abfrage in das erste neuronale Netzwerk, um eine Vektordarstellung der Abfrage zu erhalten; Eingeben der Vektordarstellungen der Zeichen in den beschreibenden Texten der angeklickten geographischen Position und der Vektordarstellungen der Zeichen in den beschreibenden Texten der ersten geographischen Positionen jeweils in das zweite neuronale Netzwerk, und Durchführen einer Gewichtungsverarbeitung auf den Vektordarstellungen der geographischen Positionen, die von dem zweiten neuronalen Netzwerk ausgegeben werden, entsprechend Assoziationsparametern zwischen entsprechenden geographischen Positionen in dem semantischen Graphen, um die Vektordarstellung des positiven Beispiels zu erhalten; Eingeben der Vektordarstellungen der Zeichen in den beschreibenden Texten der nicht angeklickten geographischen Position und der Vektordarstellungen der Zeichen in den beschreibenden Texten der zweiten geographischen Positionen jeweils in das zweite neuronale Netzwerk, und Durchführen der Gewichtungsverarbeitung auf den Vektordarstellungen der geographischen Positionen, die von dem zweiten neuronalen Netzwerk ausgegeben werden, entsprechend Assoziationsparameters zwischen entsprechenden geographischen Positionen in dem semantischen Graphen, um die Vektordarstellung des negative Beispiels zu erhalten;

Bestimmen einer ersten Ähnlichkeit zwischen der Vektordarstellung der Abfrage und der Vektordarstellung des positiven Beispiels, und einer zweiten Ähnlichkeit zwischen der Vektordarstellung derselben Abfrage und der Vektordarstellung des negativen Beispiels;

Trainieren des internationalen Wörterbuchs für Zeichenvektordarstellung, des semantischen Graphen, des ersten neuronalen Netzwerks und des zweiten neuronalen Netzwerks, um eine Differenz zwischen der ersten Ähnlichkeit und der zweiten Ähnlichkeit zu maximieren.

6. Verfahren nach Anspruch 5, wobei der semantische Graph basierend auf einem historischen Browsing-Protokoll gebildet wird;

   wobei Knoten in dem semantischen Graphen geographische Positionen sind, Assoziation zwischen entsprechenden Knoten für geographische Positionen in der Browsing-Kookkurrenz-Beziehung hergestellt wird, und Assoziationsparameter zwischen den geographischen Positionen zunächst entsprechend Kookkurrenz-Situationen zwischen den geographischen Positionen bestimmt und während dem Training aktualisiert werden.

7. Vorrichtung zum Abrufen geographischer Positionen, wobei die Vorrichtung aufweist:

   eine erste Vektorbestimmungseinheit (01), die dazu ausgebildet ist, eine von einem Benutzer eingegebene Anfrage zu erhalten, jeweils eine Vektordarstellung jedes Zeichens in der Abfrage unter Verwendung eines internationalen Wörterbuchs für Zeichenvektordarstellung zu bestimmen, und Zeichen in beschreibenden Texten geographischer Positionen in einer Kartendatenbank auf Vektordarstellungen der Zeichen mittels des internationalen Wörterbuchs für Zeichenvektordarstellung abzubilden, wobei das internationale Wörterbuch für Zeichenvektordarstellung dazu verwendet wird, Zeichen von mindestens zwei Sprachen auf denselben Vektorraum unter Verwendung einer Abbildungsfunktion abzubilden;

   eine zweite Vektorbestimmungseinheit (02), die dazu ausgebildet ist, Vektordarstellung von jeweiligen Zeichen in der Abfrage in ein erstes neuronales Netzwerk einzugeben, das durch ein Vortraining erhalten wurde, um eine Vektordarstellung der Abfrage zu erhalten, und die Vektordarstellungen der Zeichen in den beschreibenden Textes der geographischen Position in ein zweites neuronales Netzwerk einzugeben, das durch ein Vortraining erhalten wurde, um die Vektordarstellung der geographischen Position zu erhalten;

   eine Ähnlichkeitsbestimmungseinheit (03), die dazu ausgebildet ist, unter Verwendung einer Kosinus-Ähnlichkeit, eine Ähnlichkeit jeweils zwischen der Vektordarstellung der Abfrage und einer Vektordarstellung jeder geographischen Position in einer Kartendatenbank zu bestimmen;

   eine Abrufverarbeitungseinheit (04), die dazu ausgebildet ist, eine abgerufene geographische Position entsprechend jeweiligen Ähnlichkeiten zu bestimmen.

8. Vorrichtung nach Anspruch 7, wobei die beschreibenden Texte geographischer Positionen mindestens eine Art von Namen, Tag, Adresse, Kommentar und bildbeschreibendem Text umfassen.

9. Vorrichtung nach Anspruch 7, wobei die Abrufverarbeitungseinheit (04) besonders für Folgendes ausgebildet ist:

   Erstellen eines Rankings der geographischen Position in absteigender Reihenfolge der Ähnlichkeit, und Bestimmen der abgerufenen geographischen Position entsprechend einem Ranking-Ergebnis; oder

   Bestimmen eines Ähnlichkeitsmerkmals unter Verwendung der Ähnlichkeit, Verwenden des Ähnlichkeitsmerkmals als einen der Eingabevektoren eines Ranking-Modells, das durch ein Vortraining erhalten wird, und Bestimmen der abgerufenen geographischen Position unter Verwendung des Ranking-Ergebnisses der geographischen Positionen mittels des Ranking-Modells.

**10.** Vorrichtung nach Anspruch 7, wobei die Vorrichtung ferner aufweist:

eine erste Modelltrainingseinheit (05), die dazu ausgebildet ist, den folgenden Trainingsprozess im Vorfeld durchzuführen:

Erhalten von Trainingsdaten aus einem historischen Klickprotokoll, wobei die Trainingsdaten umfassen: die Abfrage und eine angeklickte geographische Position als ein positives Beispiel, das der Abfrage entspricht, und eine nicht angeklickte geografische Position als ein negatives Beispiel, das der Abfrage entspricht;
Trainieren des internationalen Wörterbuchs für Zeichenvektordarstellung, des ersten neuronalen Netzwerks und des zweiten neuronalen Netzwerks mit den Trainingsdaten, um eine Differenz zwischen einer ersten Ähnlichkeit und einer zweiten Ähnlichkeit zu maximieren, wobei vorzugsweise die erste Ähnlichkeit eine Ähnlichkeit zwischen der Vektordarstellung der Abfrage und einer Vektordarstellung des positiven Beispiels ist, und die zweite Ähnlichkeit eine Ähnlichkeit zwischen der Vektordarstellung der Abfrage und einer Vektordarstellung des negativen Beispiels ist,

wobei das Training des internationalen Wörterbuchs für Zeichenvektordarstellung, des ersten neuronalen Netzwerks und des zweiten neuronalen Netzwerks mit den Trainingsdaten umfasst:

Verwenden des internationalen Wörterbuchs für Zeichenvektordarstellung, um jeweils die Vektordarstellungen von Zeichen in den Trainingsdaten zu bestimmen;
Eingeben der Vektordarstellungen der Zeichen in der Abfrage in das erste neuronale Netzwerk, um die Vektordarstellung der Abfrage zu erhalten; Eingeben der Vektordarstellungen der Zeichen in den beschreibenden Texten der geographischen Position als positives Beispiel und der Vektordarstellungen der Zeichen in den beschreibenden Texten der geographischen Position als negatives Beispiel jeweils in das zweite neuronale Netzwerk, um die Vektordarstellungen des positiven Beispiels und die Vektordarstellung des negativen Beispiels zu erhalten;
Bestimmen der ersten Ähnlichkeit zwischen der Vektordarstellung der Abfrage und der Vektordarstellung des positiven Beispiels, und der zweiten Ähnlichkeit zwischen der Vektordarstellung derselben Abfrage und der Vektordarstellung des negativen Beispiels;
Trainieren des internationalen Wörterbuchs für Zeichenvektordarstellung, des ersten neuronalen Netzwerks und des zweiten neuronalen Netzwerks, um eine Differenz zwischen der ersten Ähnlichkeit und der zweiten Ähnlichkeit zu maximieren.

**11.** Vorrichtung nach Anspruch 7, wobei die Vorrichtung ferner aufweist:

eine zweite Modelltrainingseinheit (06), die dazu ausgebildet ist, den folgenden Trainingsprozess im Vorfeld durchzuführen:

Erhalten von Trainingsdaten aus einem historischen Klickprotokoll, wobei die Trainingsdaten umfassen: die Abfrage und die angeklickte geographische Position als positives Beispiel, das der Abfrage entspricht, und die nicht angeklickte geografische Position als negatives Beispiel, das der Abfrage entspricht;
Erweitern des positiven Beispiels und des negativen Beispiels unter Verwendung eines historischen Browsing-Protokolls basierend auf einer Browsing-Kookkurrenz-Beziehung zwischen geographischen Positionen;
Trainieren des internationalen Wörterbuchs für Zeichenvektordarstellung, des ersten neuronalen Netzwerks und des zweiten neuronalen Netzwerks mit den erweiterten Trainingsdaten, um eine Differenz zwischen einer ersten Ähnlichkeit und einer zweiten Ähnlichkeit zu maximieren, wobei vorzugsweise die erste Ähnlichkeit eine Ähnlichkeit zwischen der Vektordarstellung der Abfrage und einer Vektordarstellung des positiven Beispiels ist, und die zweite Ähnlichkeit eine Ähnlichkeit zwischen der Vektordarstellung der Abfrage und der Vektordarstellung des negativen Beispiels ist,
wobei die zweite Modelltrainingseinheit (06) besonders dazu ausgebildet ist, jeweils von einem semantischen Graphen erste geographische Positionen in einer Browsing-Kookkurrenz-Beziehung mit der angeklickten geographischen Position zu erhalten, um das positive Beispiel zu erweitern, und zweite geographische Positionen in der Browsing-Kookkurrenz-Beziehung mit der nicht angeklickten geographischen Position zu erhalten, um das negative Beispiel zu erweitert,

wobei das Training des internationalen Wörterbuchs für Zeichenvektordarstellung, des ersten neuronalen Netzwerks und des zweiten neuronalen Netzwerks mit den erweiterten Trainingsdaten umfasst:

Verwenden des internationalen Wörterbuchs für Zeichenvektordarstellung, um jeweils die Vektordarstellungen von Zeichen in den Trainingsdaten zu bestimmen;
Eingeben der Vektordarstellungen der Zeichen in der Abfrage in das erste neuronale Netzwerk, um eine Vektordarstellung der Abfrage zu erhalten; Eingeben der Vektordarstellungen der Zeichen in den beschreibenden Texten der angeklickten geographischen Position und der Vektordarstellungen der Zeichen in den beschreibenden Texten der ersten geographischen Position jeweils in das zweite neuronale Netzwerk, und Durchführen einer Gewichtungsverarbeitung auf den Vektordarstellungen der geographischen Positionen, die von dem zweiten neuronalen Netzwerk ausgegeben werden, entsprechend Assoziationsparametern zwischen entsprechenden geographischen Positionen in dem semantischen Graphen, um die Vektordarstellung des positiven Beispiels zu erhalten; Eingeben der Vektordarstellungen der Zeichen in den beschreibenden Texten der nicht angeklickten geographischen Position und
der Vektordarstellungen der Zeichen in den beschreibenden Texten der zweiten geographischen Positionen jeweils in das zweite neuronale Netzwerk, und Durchführen der Gewichtungsverarbeitung auf den Vektordarstellungen der geographischen Positionen, die von dem zweiten neuronalen Netzwerk ausgegeben werden, entsprechend Assoziationsparametern zwischen entsprechenden geographischen Positionen in dem semantischen Graphen, um die Vektordarstellung des negativen Beispiels zu erhalten;
Bestimmen einer ersten Ähnlichkeit zwischen der Vektordarstellung der Abfrage und der Vektordarstellung des positiven Beispiels, und einer zweiten Ähnlichkeit zwischen der Vektordarstellung derselben Abfrage und der Vektordarstellung des negativen Beispiels;
Trainieren des internationalen Wörterbuchs für Zeichenvektordarstellung, des semantischen Graphen, des ersten neuronalen Netzwerks und des zweiten neuronalen Netzwerks, um eine Differenz zwischen der ersten Ähnlichkeit und der zweiten Ähnlichkeit zu maximieren.

12. Vorrichtung nach Anspruch 11, wobei die Vorrichtung ferner aufweist:

eine Bildungseinheit (07) für einen semantischen Graphen, die dazu ausgebildet ist, den semantischen Graphen basierend auf einem historischen Browsing-Protokoll zu bilden, wobei Knoten in dem semantischen Graphen geographische Positionen sind, Assoziation zwischen entsprechenden Knoten für geographische Positionen in der Browsing-Kookkurrenz-Beziehung hergestellt wird, und Assoziationsparameter zwischen den geographischen Positionen zunächst entsprechend Kookkurrenz-Situationen zwischen den geographischen Positionen bestimmt werden;
wobei die zweite Modelltrainingseinheit (06) die Assoziationsparameter zwischen geographischen Positionen in dem semantischen Graphen während dem Training aktualisiert.

13. Elektronische Vorrichtung, wobei die elektronische Vorrichtung aufweist:

mindestens einen Prozessor; und
einen Speicher, der kommunikativ mit dem mindestens einen Prozessor verbunden ist; wobei der Speicher Instruktionen speichert, die von dem mindestens einen Prozessor ausführbar sind, und wobei die Instruktionen von dem mindestens einen Prozessor ausgeführt werden, um zu bewirken, dass der mindestens eine Prozessor das Verfahren nach einem der Ansprüche 1-6 durchführt.

14. Nichtflüchtiges computerlesbares Speichermedium, das Computerinstruktionen darin speichert, wobei die Computerinstruktionen dazu verwendet werden, zu bewirken, dass der Computer das Verfahren nach einem der Ansprüche 1-6 durchführt.

15. Computerprogrammprodukt, das Instruktionen aufweist, die bei Ausführung des Programms durch einen Computer bewirken, dass der Computer das Verfahren nach einem der Ansprüche 1-6 durchführt.

**EP 3 926 493 B1**

**Revendications**

1. Procédé permettant de récupérer des positions géographiques, comprenant

l'obtention d'une entrée de requête par un utilisateur, respectivement la détermination (301a) d'une représentation vectorielle de chaque caractère dans la requête à l'aide d'un dictionnaire de représentation vectorielle internationale de caractères, et le mappage (301b) des caractères dans des textes descriptifs de positions géographiques dans une base de données cartographiques à des représentations vectorielles des caractères par le dictionnaire de représentation vectorielle internationale de caractères, le dictionnaire de représentation vectorielle internationale de caractères étant utilisé pour le mappage des caractères d'au moins deux langues dans le même espace vectoriel à l'aide d'une fonction de mappage ;
la saisie (302a) des représentations vectorielles des caractères respectifs dans la requête dans un premier réseau neuronal obtenu par pré-apprentissage, pour obtenir une représentation vectorielle de la requête, et la saisie (302b) des représentations vectorielles des caractères dans les textes descriptifs des positions géographiques dans un second réseau neuronal obtenu par pré-apprentissage pour obtenir les représentations vectorielles des positions géographiques ;
la détermination (303), à l'aide de la similarité cosinus, d'une similarité respectivement entre la représentation vectorielle de la requête et une représentation vectorielle de chaque position géographique dans une base de données cartographiques ;
la détermination (304) d'une position géographique récupérée en fonction de similarités respectives.

2. Procédé selon la revendication 1, dans lequel les textes descriptifs des positions géographiques comprennent au moins un type de texte descriptif de nom, d'étiquette, d'adresse, de commentaire et d'image.

3. Procédé selon la revendication 1, dans lequel la détermination de la position géographique récupérée selon des similitudes respectives comprend :

le classement des positions géographiques dans un ordre décroissant de similarité, et la détermination de la position géographique récupérée selon un résultat de classement ; ou
la détermination d'une caractéristique de similarité à l'aide de la similarité, le fait de prendre la caractéristique de similarité comme étant l'un des vecteurs d'entrée d'un modèle de classement obtenu par pré-apprentissage, et la détermination de la position géographique récupérée à l'aide du résultat du classement des positions géographiques par le modèle de classement.

4. Procédé selon la revendication 1, dans lequel le procédé comprend en outre l'exécution à l'avance du processus d'apprentissage suivant :

l'obtention de données d'apprentissage à partir d'un journal de clics historique, les données d'apprentissage comportant : la requête et une position géographique cliquée en tant qu'échantillon positif correspondant à la requête et une position géographique non cliquée en tant qu'échantillon négatif correspondant à la requête ;
l'apprentissage pour le dictionnaire de représentation vectorielle internationale de caractères, le premier réseau neuronal et le second réseau neuronal avec les données d'apprentissage pour maximiser une différence entre une première similarité et une seconde similarité, la première similarité étant une similarité entre la représentation vectorielle de la requête et une représentation vectorielle de l'échantillon positif, et la seconde similarité étant une similarité entre la représentation vectorielle de la requête et une représentation vectorielle de l'échantillon négatif, de préférence
l'apprentissage pour le dictionnaire de représentation vectorielle internationale de caractères, le premier réseau neuronal et le second réseau neuronal avec les données d'apprentissage comprend :

l'utilisation du dictionnaire de représentation vectorielle internationale de caractères pour déterminer respectivement des représentations vectorielles de caractères dans les données d'apprentissage ;
la saisie des représentations vectorielles des caractères dans la requête dans le premier réseau neuronal pour obtenir la représentation vectorielle de la requête ; la saisie des représentations vectorielles des caractères dans les textes descriptifs de la position géographique en tant qu'échantillon positif et des représentations vectorielles des caractères dans les textes descriptifs de la position géographique en tant qu'échantillon négatif respectivement dans le second réseau neuronal, pour obtenir les représentations vectorielles de l'échantillon positif et la représentation vectorielle de l'échantillon négatif ;
la détermination de la première similarité entre la représentation vectorielle de la requête et la représentation

22

vectorielle de l'échantillon positif, et de la seconde similarité entre la représentation vectorielle de la même requête et la représentation vectorielle de l'échantillon négatif ;

l'apprentissage pour le dictionnaire de représentation vectorielle internationale de caractères, le premier réseau neuronal et le second réseau neuronal pour maximiser une différence entre la première similarité et la seconde similarité.

**5.** Procédé selon la revendication 1, dans lequel le procédé comprend en outre l'exécution à l'avance du processus d'apprentissage suivant :

l'obtention de données d'apprentissage à partir d'un journal de clics historique, les données d'apprentissage comprenant : la requête et la position géographique cliquée comme échantillon positif correspondant à la requête et la position géographique non cliquée comme échantillon négatif correspondant à la requête ;

l'extension de l'échantillon positif et de l'échantillon négatif à l'aide d'un journal de navigation historique, sur la base d'une relation de cooccurrence de navigation entre des positions géographiques ;

l'apprentissage pour le dictionnaire de représentation vectorielle internationale de caractères, le premier réseau neuronal et le second réseau neuronal avec les données d'apprentissage étendues pour maximiser une différence entre une première similarité et une seconde similarité, la première similarité étant une similarité entre la représentation vectorielle de la requête et la représentation vectorielle de l'échantillon positif, et la seconde similarité étant une similarité entre la représentation vectorielle de la requête et la représentation vectorielle de l'échantillon négatif, de préférence

l'extension de l'échantillon positif et de l'échantillon négatif à l'aide d'un journal de navigation historique, sur la base d'une relation de cooccurrence de navigation entre des positions géographiques comprend :

l'obtention, respectivement, à partir d'un graphe sématique, de premières positions géographiques dans une relation de co-occurrence de navigation avec la position géographique cliquée pour étendre l'échantillon positif, et l'obtention de secondes positions géographiques dans la relation de co-occurrence de navigation avec la position géographique non cliquée pour étendre l'échantillon négatif, de préférence

l'apprentissage pour le dictionnaire de représentation vectorielle internationale de caractères, le premier réseau neuronal et le second réseau neuronal avec les données d'apprentissage étendues comprend :

l'utilisation du dictionnaire de représentation vectorielle internationale de caractères pour déterminer respectivement des représentations vectorielles de caractères dans les données d'apprentissage ;

la saisie des représentations vectorielles des caractères dans la requête dans le premier réseau neuronal pour obtenir une représentation vectorielle de la requête ; la saisie des représentations vectorielles des caractères dans les textes de description de la position géographique cliquée et des représentations vectorielles des caractères dans les textes descriptifs des premières positions géographiques respectivement dans le second réseau neuronal, et le fait d'effectuer un traitement de pondération sur les représentations vectorielles des positions géographiques sorties par le second réseau de neurones en fonction de paramètres d'association entre des positions géographiques correspondantes dans le graphe sémantique, pour obtenir la représentation vectorielle de l'échantillon positif ; la saisie des représentations vectorielles des caractères dans les textes de description de la position géographique non cliquée et des représentations vectorielles des caractères dans les textes descriptifs des secondes positions géographiques respectivement dans le second réseau neuronal, et le fait d'effectuer un traitement de pondération sur les représentations vectorielles des positions géographiques sorties par le second réseau de neurones en fonction de paramètres d'association entre des positions géographiques correspondantes dans le graphe sémantique, pour obtenir la représentation vectorielle de l'échantillon négatif ;

la détermination d'une première similarité entre la représentation vectorielle de la requête et la représentation vectorielle de l'échantillon positif, et d'une seconde similarité entre la représentation vectorielle de la même requête et la représentation vectorielle de l'échantillon négatif ;

l'apprentissage pour le dictionnaire de représentation vectorielle internationale de caractères, le graphe sématique, le premier réseau neuronal et le second réseau neuronal pour maximiser une différence entre la première similarité et la seconde similarité.

**6.** Procédé selon la revendication 5, dans lequel le graphe sématique est construit sur la base d'un journal de navigation historique ;

des noeuds dans le graphe sématique sont des positions géographiques, une association entre des noeuds correspondants est établie pour des positions géographiques dans la relation de cooccurrence de navigation, et des paramètres d'association entre les positions géographiques sont initialement déterminés en fonction de situations de cooccurrence entre les positions géographiques et mis à jour pendant l'apprentissage.

7. Appareil pour récupérer des positions géographiques, l'appareil comprend :

une première unité de détermination de vecteur (01) configurée pour obtenir une requête entrée par un utilisateur, déterminer respectivement une représentation vectorielle de chaque caractère dans la requête à l'aide d'un dictionnaire de représentation vectorielle internationale de caractères, et mapper des caractères dans des textes descriptifs de positions géographiques dans une base de données cartographiques à des représentations vectorielles des caractères par le dictionnaire de représentation vectorielle internationale de caractères, le dictionnaire de représentation vectorielle internationale de caractères étant utilisé pour mapper des caractères d'au moins deux langues dans le même espace vectoriel à l'aide d'une fonction de mappage ;
une seconde unité de détermination de vecteur (02) configurée pour entrer des représentations vectorielles de caractères respectifs dans la requête dans un premier réseau neuronal obtenu par pré-apprentissage, pour obtenir une représentation vectorielle de la requête, et entrer les représentations vectorielles des caractères dans la description des textes de la position géographique dans un second réseau neuronal obtenu par pré-apprentissage pour obtenir la représentation vectorielle de la position géographique ;
une unité de détermination de similarité (03) configurée pour déterminer, à l'aide de la similarité cosinus, une similarité respectivement entre la représentation vectorielle de la requête et une représentation vectorielle de chaque position géographique dans une base de données cartographique ;
une unité de traitement de récupération (04) configurée pour déterminer une position géographique récupérée selon des similarités respectives.

8. Appareil selon la revendication 7, dans lequel les textes descriptifs de positions géographiques comprennent au moins un type de texte descriptif de nom, d'étiquette, d'adresse, de commentaire et d'image.

9. Appareil selon la revendication 7, dans lequel l'unité de traitement de récupération (04) est spécifiquement configurée pour :

classer les positions géographiques dans un ordre décroissant de similarité, et déterminer la position géographique récupérée selon un résultat de classement ; ou
déterminer une caractéristique de similarité à l'aide de la similarité, prendre la caractéristique de similarité comme l'un des vecteurs d'entrée d'un modèle de classement obtenu par pré-apprentissage, et déterminer la position géographique récupérée à l'aide du résultat de classement des positions géographiques par le modèle de classement.

10. Appareil selon la revendication 7, dans lequel l'appareil comprend en outre :

une première unité d'apprentissage de modèle (05) configurée pour exécuter à l'avance le processus d'apprentissage suivant :

l'obtention de données d'apprentissage à partir d'un journal de clics historique, les données d'apprentissage comportant : la requête et une position géographique cliquée en tant qu'échantillon positif correspondant à la requête et une position géographique non cliquée en tant qu'échantillon négatif correspondant à la requête ;
l'apprentissage pour le dictionnaire de représentation vectorielle internationale de caractères, le premier réseau neuronal et le second réseau neuronal avec les données d'apprentissage pour maximiser une différence entre une première similarité et une seconde similarité, la première similarité étant une similarité entre la représentation vectorielle de la requête et la représentation vectorielle de l'échantillon positif, et la seconde similarité étant une similarité entre la représentation vectorielle de la requête et la représentation vectorielle de l'échantillon négatif, de préférence

lors de l'apprentissage pour le dictionnaire de représentation vectorielle internationale de caractères, le premier réseau neuronal et le second réseau neuronal avec les données d'apprentissage, la première unité d'apprentissage de modèle effectue :

l'utilisation du dictionnaire de représentation vectorielle internationale de caractères pour déterminer respectivement des représentations vectorielles de caractères dans les données d'apprentissage ;
la saisie des représentations vectorielles des caractères dans la requête dans le premier réseau neuronal pour obtenir la représentation vectorielle de la requête ; la saisie des représentations vectorielles des caractères dans les textes descriptifs de la position géographique en tant qu'échantillon positif et des représentations vectorielles des caractères dans les textes descriptifs de la position géographique en tant qu'échantillon négatif respectivement dans le second réseau neuronal, pour obtenir la représentation vectorielle de l'échantillon positif et la représentation vectorielle de l'échantillon négatif ;

la détermination de la première similarité entre la représentation vectorielle de la requête et la représentation vectorielle de l'échantillon positif, et de la seconde similarité entre la représentation vectorielle de la même requête et la représentation vectorielle de l'échantillon négatif ;

l'apprentissage pour le dictionnaire de représentation vectorielle internationale de caractères, le premier réseau neuronal et le second réseau neuronal pour maximiser une différence entre la première similarité et la seconde similarité.

11. Appareil selon la revendication 7, dans lequel l'appareil comprend en outre :

une seconde unité d'apprentissage de modèle (06) configurée pour exécuter à l'avance le processus d'apprentissage suivant :

l'obtention de données d'apprentissage à partir d'un journal de clics historique, les données d'apprentissage comprenant : la requête et la position géographique cliquée comme échantillon positif correspondant à la requête et la position géographique non cliquée comme échantillon négatif correspondant à la requête ;

l'extension de l'échantillon positif et de l'échantillon négatif à l'aide d'un journal de navigation historique, sur la base d'une relation de cooccurrence de navigation entre des positions géographiques ;

l'apprentissage pour le dictionnaire de représentation vectorielle internationale de caractères, le premier réseau neuronal et le second réseau neuronal avec les données d'apprentissage étendues pour maximiser une différence entre une première similarité et une seconde similarité, la première similarité étant une similarité entre la représentation vectorielle de la requête et la représentation vectorielle de l'échantillon positif, et la seconde similarité étant une similarité entre la représentation vectorielle de la requête et la représentation vectorielle de l'échantillon négatif, de préférence

la seconde unité d'apprentissage de modèle (06) est spécifiquement configurée pour obtenir respectivement, à partir d'un graphe sématique, des premières positions géographiques dans une relation de cooccurrence de navigation avec la position géographique cliquée pour étendre l'échantillon positif, et pour obtenir des secondes positions géographiques dans la relation de cooccurrence avec la position géographique non cliquée pour étendre l'échantillon négatif, de préférence

lors de l'apprentissage pour le dictionnaire de représentation vectorielle international de caractères, le premier réseau neuronal et le second réseau neuronal avec les données d'apprentissage étendues, la seconde unité d'apprentissage de modèle (06) exécute :

l'utilisation du dictionnaire de représentation vectorielle internationale de caractères pour déterminer respectivement des représentations vectorielles de caractères dans les données d'apprentissage ;

la saisie des représentations vectorielles des caractères dans la requête dans le premier réseau neuronal pour obtenir une représentation vectorielle de la requête ; la saisie des représentations vectorielles des caractères dans les textes de description de la position géographique cliquée et des représentations vectorielles des caractères dans les textes descriptifs des premières positions géographiques respectivement dans le second réseau neuronal, et le fait d'effectuer un traitement de pondération sur les représentations vectorielles des positions géographiques sorties par le second réseau de neurones en fonction de paramètres d'association entre des positions géographiques correspondantes dans le graphe sémantique, pour obtenir la représentation vectorielle de l'échantillon positif ; la saisie des représentations vectorielles des caractères dans les textes de description de la position géographique non cliquée et des représentations vectorielles des caractères dans les textes descriptifs des secondes positions géographiques respectivement dans le second réseau neuronal, et le fait d'effectuer un traitement de pondération sur les représentations vectorielles des positions géographiques sorties par le second réseau de neurones en fonction de paramètres d'association entre des positions géographiques correspondantes dans le graphe sémantique, pour obtenir la représentation vectorielle de l'échantillon négatif ;

la détermination d'une première similarité entre la représentation vectorielle de la requête et la représentation vectorielle de l'échantillon positif, et d'une seconde similarité entre la représentation vectorielle de la même requête et la représentation vectorielle de l'échantillon négatif ;

l'apprentissage pour le dictionnaire de représentation vectorielle internationale de caractères, le graphe sématique, le premier réseau neuronal et le second réseau neuronal pour maximiser une différence entre la première similarité et la seconde similarité.

**12.** Appareil selon la revendication 11, dans lequel l'appareil comprend en outre :

une unité de construction de graphe sématique (07) configurée pour construire le graphe sématique sur la base d'un journal de navigation historique, des noeuds dans le graphe sématique étant des positions géographiques, une association entre des noeuds correspondants étant établie pour des positions géographiques dans la relation de cooccurrence de navigation, des paramètres d'association entre les positions géographiques étant initialement déterminées en fonction de situations de cooccurrence entre les positions géographiques ;
la seconde unité d'apprentissage de modèle (06) met à jour les paramètres d'association entre les positions géographiques dans le graphe sématique pendant l'apprentissage.

**13.** Dispositif électronique, dans lequel le dispositif électronique comprend :

au moins un processeur ; et
une mémoire connectée à l'au moins un processeur de manière communicative ; dans laquelle,
la mémoire stocke des instructions exécutables par l'au moins un processeur, et les instructions sont exécutées par l'au moins un processeur pour amener l'au moins un processeur à exécuter le procédé selon l'une quelconque des revendications 1 à 6.

**14.** Support de stockage non transitoire lisible par ordinateur stockant des instructions informatiques dans celui-ci, dans lequel les instructions informatiques sont utilisées pour amener l'ordinateur à exécuter le procédé selon l'une quelconque des revendications 1 à 6.

**15.** Produit de programme informatique comprenant des instructions qui, lorsque le programme est exécuté par un ordinateur, amènent l'ordinateur à exécuter le procédé selon l'une quelconque des revendications 1 à 6.

FIG.1

FIG.2

301a

Respectively determine a vector representation of each character in a query input by a user using an international character vector representation dictionary

301b

Map characters in descriptive texts of geographic positions in a map database to vector representations of the characters by the international character vector representation dictionary

302a

Input the vector representations of the characters in the query into a first neural network, to obtain a vector representation of the query

302b

Input the vector representations of the characters in the descriptive texts of the geographic position into a second neural network to obtain the vector representation of the geographic position

303

Determine a similarity respectively between the vector representation of the query and a vector representation of each geographic position in a map database

304

Determine a retrieved geographic position according to the respective determined similarities

FIG.3

401

Obtain training data from a historical click log, the training data including: the query and a clicked geographic position as a positive sample corresponding to the query and an unclicked geographic position as a negative sample corresponding to the query

402

Train the international character vector representation dictionary, the first neural network and the second neural network with training data to maximize a difference between a first similarity and a second similarity, the first similarity being a similarity between the vector representation of query and the vector representation of the positive sample, and the second similarity being a similarity between the vector representation of query and the vector representation of the negative sample

FIG.4

FIG.5

601

Obtain training data from a historical click log, the training data including: the query and the clicked geographic position as the positive sample corresponding to the query and the unclicked geographic position as the negative sample corresponding to the query

602

Extend the positive sample and the negative sample using a historical browse log, based on a browse co-occurrence relationship between geographic positions

603

Train the international character vector representation dictionary, the first neural network and the second neural network with the extended training data to maximize a difference between the first similarity and the second similarity, wherein the first similarity is a similarity between the vector representation of the query and the vector representation of the positive sample, and the second similarity is a similarity between the vector representation of the query and the vector representation of the negative sample

FIG.6

q1    q2    q3

P1    a12    P2    a23    P3    a37

a14    a25    a36    P7

P4    P5    P6

FIG.7

FIG.8

First vector determining unit 01

Second vector determining unit 02

Similarity determining unit 03

Retrieval processing unit 04

Similarity model

International character vector representation dictionary

First neural network

Second neural network

First model training unit 05

Second model training unit 06

Semantic graph building unit 07

Historical click log

Semantic graph

Historical browse log

FIG.9

Processor 1001

Input device 1003

Bus

Program

Memory 1002

Output device 1004

FIG.10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110765368 A